# EUROPEAN PATENT APPLICATION

(11) **EP 4 460 040 A1**
(43) Date of publication of application: **06.11.2024**
(21) Application number: 22915653.4
(22) Date of filing: 06.12.2022
(51) Int. Cl.: H04R 3/00, B60R 11/02, G10K 15/04

(54) **INFORMATION PROCESSING DEVICE, INFORMATION PROCESSING METHOD, PROGRAM, AND INFORMATION PROCESSING SYSTEM**

(30) Priority: 28.12.2021 JP 2021214483
(71) Applicant: Sony Group Corporation, Tokyo 108-0075 (JP)
(72) Inventor: SHIMIZU, Junichi, Tokyo 108-0075 (JP); FUJIKI, Manabu, Tokyo 108-0075 (JP); NAGASHIMA, Chihiro, Tokyo 108-0075 (JP)
(74) Representative: Witte, Weller & Partner Patentanwälte mbB
(86) International application number: PCT/JP2022/044839
(87) International publication number: WO 2023/127422

(57) **Abstract**

The present technology relates to an information processing apparatus, an information processing method, a program, and an information processing system capable of providing a content viewing experience that does not make a user feel bored.

An information processing apparatus according to one aspect of the present technology includes: a content information setting unit that sets content information including content parameter information defining a content of playback control of content;
a trigger information setting unit that sets trigger information defining a condition for performing playback control of the content; and a content generation parameter setting unit that sets a content generation parameter by associating the content information with the trigger information. The present technology can be applied to a smartphone and an in-vehicle device.

## Description

### TECHNICAL FIELD

The present technology relates to an information processing apparatus, an information processing method, a program, and an information processing system, and more particularly, to an information processing apparatus, an information processing method, a program, and an information processing system capable of realizing a content viewing experience that maintains a world view intended by an artist without boring a user.

### BACKGROUND ART

With the progress of EV vehicles equipped with an automated driving function, there is a demand for a technology that can improve the experience while riding.

Patent Document 1 discloses a technique of generating a parameter for creating music on the basis of information from each unit in an automobile and generating musical score data on the basis of the generated parameter.

### CITATION LIST

### PATENT DOCUMENT

Patent Document 1: Japanese Patent Application Laid-Open No. 2006-69288

### SUMMARY OF THE INVENTION

### PROBLEMS TO BE SOLVED BY THE INVENTION

The music viewing experience using the information obtained from a vehicle body as disclosed in Patent Document 1 is a passive experience, and a user is likely to get bored due to a reason that a music change becomes monotonous, a reason that an unintended music change occurs due to erroneous detection of the vehicle body information, or the like. In addition, the music experience intended by an artist cannot be sufficiently realized.

The present technology has been made in view of such a situation, and an object of the present technology is to realize a content viewing experience that maintains a world view intended by an artist without boring a user.

### SOLUTIONS TO PROBLEMS

An information processing apparatus according to a first aspect of the present technology includes: a content information setting unit that sets content information including content parameter information defining a content of playback control of content; a trigger information setting unit that sets trigger information defining a condition for performing playback control of the content; and a content generation parameter setting unit that sets a content generation parameter by associating the content information with the trigger information.

An information processing method or a program according to the first aspect of the present technology includes the steps of: setting content information including content parameter information defining content of playback control of content; setting trigger information defining a condition for performing playback control of the content; and setting a content generation parameter by associating the content information with the trigger information.

In the first aspect of the present technology, the content information including the content parameter information defining the content of playback control of content is set, the setting trigger information defining the condition for performing the playback control of the content is set, and the content generation parameter by associating the content information with the trigger information is set.

An information processing apparatus according to a second aspect of the present technology includes: an event acquisition unit that acquires an event during movement of a user; an acquisition unit that acquires a content generation parameter set by associating content information including content parameter information defining a content of playback control of content with trigger information defining a condition for performing the playback control of the content; and a content playback control unit that performs playback control of the content on the basis of the content information associated with the trigger information in a case where the event serving as the condition defined by the trigger information is acquired.

An information processing method or a program according to the second aspect of the present technology includes the steps of: acquiring an event during movement of a user; acquiring a content generation parameter set by associating content information including content parameter information defining a content of playback control of content with trigger information defining a condition for performing the playback control of the content; and performing playback control of the content on the basis of the content information associated with the trigger information in a case where the event serving as a condition defined by the trigger information has been acquired.

In the second aspect of the present technology, the event during movement of the user is acquired, the content generation parameter set by associating the content information including content parameter information defining the content of playback control of content with the trigger information defining the condition for performing the playback control of the content is acquired, and the playback control of the content is performed on the basis of the content information associated with the trigger information in a case where the event serving as a condition defined by the trigger information has been acquired.

### BRIEF DESCRIPTION OF DRAWINGS

Fig. 1 is a diagram illustrating an example of content playback control on a user side.
Fig. 2 is a diagram illustrating an example of trigger information set in advance on a creator side and content playback control.
Fig. 3 is a diagram illustrating an example of playback control using an additional track.
Fig. 4 is a diagram illustrating an example of components of content.
Fig. 5 is a diagram illustrating a configuration example of an information processing system according to an embodiment of the present technology.
Fig. 6 is a block diagram illustrating a hardware configuration example of a creator terminal.
Fig. 7 is a block diagram illustrating a hardware configuration example of a user terminal.
Fig. 8 is a block diagram illustrating a functional configuration example of an information processing system.
Fig. 9 is a diagram illustrating a data structure of a content generation parameter.
Fig. 10 is a diagram illustrating one example of a setting screen displayed on a creator terminal.
Fig. 11 is a diagram illustrating another example of the setting screen displayed on the creator terminal.
Fig. 12 is a diagram illustrating another example of the setting screen displayed on the creator terminal.
Fig. 13 is a diagram illustrating another example of the setting screen displayed on the creator terminal.
Fig. 14 is a diagram illustrating another example of the setting screen displayed on the creator terminal.
Fig. 15 is a diagram illustrating another example of the setting screen displayed on the creator terminal.
Fig. 16 is a diagram illustrating another example of the setting screen displayed on the creator terminal.
Fig. 17 is a diagram illustrating another example of the setting screen displayed on the creator terminal.
Fig. 18 is a diagram illustrating another example of the setting screen displayed on the creator terminal.
Fig. 19 is a diagram illustrating another example of the setting screen displayed on the creator terminal.
Fig. 20 is a diagram illustrating another example of the setting screen displayed on the creator terminal.
Fig. 21 is a diagram illustrating an example of a product in a series of operations by a creator using a setting screen.
Fig. 22 is a flowchart illustrating an operation of the creator terminal.
Fig. 23 is a diagram illustrating an example of a playback space in which content is output.
Fig. 24 is a diagram illustrating one specific example in which playback control of content is performed on the user side.
Fig. 25 is a diagram illustrating another specific example in which playback control of content is performed on the user side.
Fig. 26 is a diagram illustrating another specific example in which playback control of content is performed on the user side.
Fig. 27 is a diagram illustrating another specific example in which playback control of content is performed on the user side.
Fig. 28 is a diagram illustrating another specific example in which playback control of content is performed on the user side.
Fig. 29 is a diagram illustrating another specific example in which playback control of content is performed on the user side.
Fig. 30 is a diagram illustrating another specific example in which playback control of content is performed on the user side.
Fig. 31 is a flowchart when playback control of content is performed on the user side.
Fig. 32 is a diagram illustrating an example of tracks to be subjected to playback control.
Fig. 33 is a diagram illustrating an example of playback control for a track generated by sound source separation.
Fig. 34 is a diagram illustrating types of sound sources.
Fig. 35 is a block diagram illustrating a configuration example of a music control unit.
Fig. 36 is a diagram illustrating an example of each piece of information.
Fig. 37 is a diagram illustrating a specific example of remixing existing music.
Fig. 38 is a diagram illustrating an example of connection processing of existing music.
Fig. 39 is a diagram illustrating an example of tracks configuring existing music.
Fig. 40 is a diagram illustrating another example of connection processing of existing music.
Fig. 41 is a diagram illustrating an example of a production workflow in a case where sound source separation is used.
Fig. 42 is a diagram illustrating a configuration example of an information processing server in a case where sound source separation is performed on a cloud side.
Fig. 43 is a diagram illustrating one example of object recognition.
Fig. 44 is a diagram illustrating one example of music generation.
Fig. 45 is a diagram illustrating another example of object recognition.
Fig. 46 is a diagram illustrating another example of music generation.
Fig. 47 is a diagram illustrating an image of music generation according to a position of an object.
Fig. 48 is a diagram illustrating a display example of the user terminal during music playback.
Fig. 49 is a diagram illustrating an example of a detection position of luminance.
Fig. 50 is a diagram illustrating an example of a state change of a production image.
Fig. 51 is a diagram illustrating an example of music generation.
Fig. 52 is a diagram illustrating a display example of a map used for setting an area.

### MODE FOR CARRYING OUT THE INVENTION

A mode for carrying out the present technology will be described hereinafter. The description is given in the following order.
1. Outline of the present technology
2. Example of system configuration
3. Processing in creator terminal
4. Example of music data playback control on user side
5. Modification

### <Outline of the present technology>

First, an outline of the present technology will be described.

The information processing system of the present technology is mainly realized by a configuration on a creator side such as an artist and a configuration on a user side that drives a vehicle.

First, a content generation parameter used for playback control of content is set on the creator side in advance. The content generation parameter is information associating an algorithm defining content related to content playback control with trigger information defining a condition serving as a trigger when the content playback control is performed. The content generation parameter may be stored in a server on the network and provided to the user side through the server, or may be stored in a local terminal.

Thereafter, on the user side, the content subjected to playback control on the basis of the above-described content generation parameter, and position information and vehicle body information on the vehicle driven by the user is output to an in-vehicle space and presented to the user. For example, the content is played back such that the output content dynamically changes according to a driving situation of the user or a surrounding environment.

Therefore, the creator can provide the user with a content viewing experience more strongly reflecting his/her own world view and taste. Furthermore, the user can enjoy content that dynamically changes according to his/her driving situation and the surrounding environment.

For example, the following playback control is performed on the basis of the content generation parameter, the vehicle position information, and the vehicle body information.
1. Perform reverb processing on vocals as approaching Tokyo Tower
2. Add synthesizer sound to content being played when turn right or left at specific intersection
3. Decrease volume of content being played at stop, and gradually increase volume after start

For example, in the case of the playback control of the above 1, information indicating that "reverb processing is applied to the vocal" is set as the algorithm of the content generation parameter.

Furthermore, in the case of the playback control of the above 1, information indicating "as approaching Tokyo Tower" is set as the trigger information on the content generation parameter. As described above, the trigger information is information including, for example, area information indicating the start and end of an area set in advance on the creator side, landmark information indicating a landmark such as Tokyo Tower or Rainbow Bridge, point of interest (POI) information indicating a specific point such as a specific intersection, a tunnel, or a bridge.

These pieces of information are set in advance on the creator side as a condition serving as a trigger when the playback control of the content is performed. For example, conditions such as a case where the area is switched, a case where the vehicle approaches the vicinity of the landmark, and a case where the vehicle turns right or left at an intersection designated as a specific point are set as the trigger.

The outline of the flow in which the playback control of the content is performed on the basis of the content generation parameter set in advance on the creator side and presented to the user side has been described above.

On the other hand, in order to actually perform the content playback control on the user side, it is necessary for the user side to determine whether or not the above-described trigger information is satisfied.

In the present technology, in order to determine whether or not the trigger information is satisfied, the above-described position information and vehicle body information on the vehicle driven by the user are used. The vehicle body information includes, for example, information indicating start/stop, acceleration/deceleration, right/left turn, and speed of the vehicle. In a case where the user is not in a moving object, position information, a walking speed, or the like of the user himself/herself may be used.

These pieces of information are information actually measured on the user side using a sensor mounted on a vehicle driven by the user and various sensors such as an acceleration sensor and a gyro sensor built in a smartphone set in the vehicle, and are defined as events below.

In a case where it is determined that the event such as the vehicle position information or the vehicle body information actually measured on the user side satisfies the trigger information, the content for which the playback control based on the content generation parameter set in advance on the creator side is performed is output to the user side.

On the other hand, in a case where it is determined that the event does not satisfy the trigger information, basically, the playback control based on the content generation parameter set in advance on the creator side is not performed. However, as will be described in detail later, the content generation parameter may be controlled on the user side as long as the content generation parameter does not deviate from the creator's setting or intention. Here, the control of the content generation parameter on the user side is, for example, processing of changing the content generation parameter set in advance on the creator side.

In the following description, it is assumed that the content is music data. Not only music data but also video data (moving image data) may be used as content, or data including music data and video data may be used as content.

Furthermore, the content may be, for example, sound data such as an environmental sound or a radio, or may be data other than the above-described data. Note that the audio data includes data of a sound different from music (natural sounds such as wave sound, rain sound, and brook sound, sound effects, human voice, guidance voice, machine sound, ..., and the like).

The music data includes a time series of one or more parts characterized by melody, rhythm, harmony, tone (key), and the like. One piece of music data can include a plurality of the same parts. A part can include repetition of a predetermined pattern or phrase by some or all of the sounds (elements) making up the part.

Hereinafter, the playback control of the music data using the present technology is performed in a space inside the vehicle driven by the user. The present technology can also be applied to a case where a moving object other than a vehicle, such as a ship, an airplane, a train, or a bicycle, receives a music viewing experience. Note that the present technology can be applied not only to a case where the user is in the moving object but also to a case where the user is walking. In addition, although details will be described later, for example, a smartphone is installed in the vehicle.

Events such as deceleration/stop, start/acceleration, right/left turn, a current position, a specific point, and a landmark of a vehicle body are detected on the basis of measurement results by various sensors built in a smartphone, such as a positioning sensor such as a global positioning system (GPS) sensor, an acceleration sensor, a gyro sensor, and a camera, playback control based on these events and a content generation parameter is performed, and a playback sound (music) of playback-controlled music data is output to an in-vehicle space. As a result, the user can sufficiently reflect the intention of the creator and enjoy the dynamically changing music viewing experience.

In addition to the above, information such as a road situation (whether the road is a well-maintained road, a bad road, or the like), a congestion (congestion) situation, and a speed limit for each traveling area may be acquired by accessing various traffic databases, and playback control of music data may be performed on the basis of the information.

Furthermore, for example, the same playback control may be performed for the first time and the second time when the user passes around the landmark, or different playback control may be performed for the first time and the second time when it is determined that the user is likely to feel bored. Such a setting can also be set in advance on the creator side.

Here, the smartphone installed in the vehicle is taken as an example of the device used for the playback control of the music data, but for example, a PC or a vehicle navigation system installed in the vehicle may be used. Furthermore, the information obtained from the various traffic databases described above may be information obtained in real time from a server on a cloud through a network, or may be information obtained in advance and stored in a storage medium such as a memory.

### • Playback control on user side

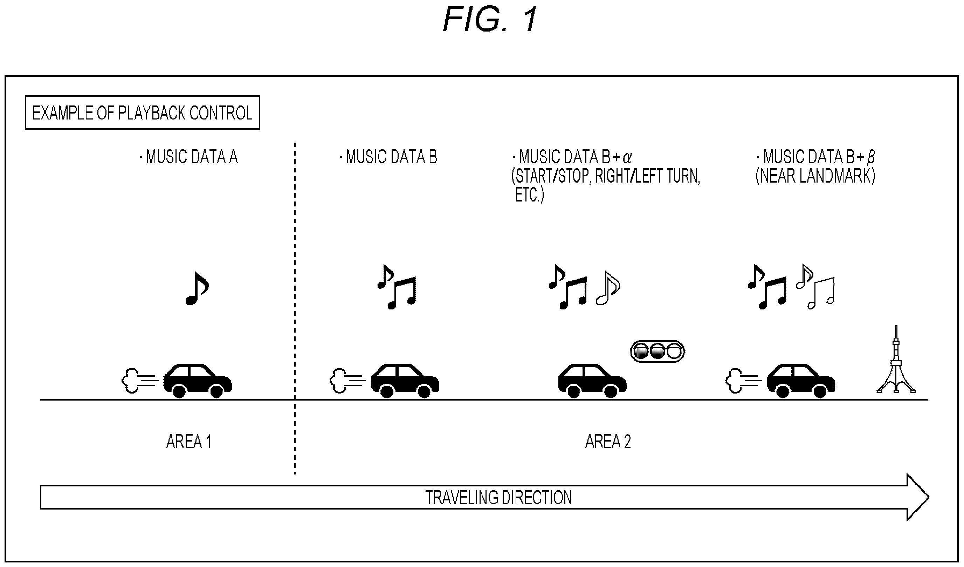

Fig. 1 is a diagram illustrating an example of playback control of music data on the user side.

A state illustrated on a left side of Fig. 1 is a state in which a vehicle driven by a user is traveling in an area 1. While traveling in the area 1, music data A allocated to the area 1 is played back. As will be described later, a main track used for loop playback is allocated in advance to each area by a creator. The main track referred to herein is music data mainly played back in each area.

A note illustrated on a left side of Fig. 1 indicates that a playback sound of the music data A is output in the vehicle while the vehicle is traveling in the area 1. Other notes illustrated in Fig. 1 also indicate that the playback sound of the music data to be subjected to the playback control is output during traveling in each area.

Next, as indicated by a broken line in Fig. 1, in a case where the traveling area is switched from the area 1 to an area 2, the main track to be played back is switched from the music data A allocated to the area 1 to music data B allocated to the area 2. That is, in a case where the user side acquires an event indicating that the area has been switched from the area 1 to the area 2, and it is determined that the acquired event satisfies trigger information set in advance on the creator side, the playback control of switching from the music data A to the music data B is performed.

During traveling in the area 2, in a case where stop/start, right/left turn, or the like is performed at a specific point such as an intersection, the playback is switched from the music data B to music data B+α. That is, an event such as stop/start or right/left turn at a specific point in the area 2 is acquired on the user side, and in a case where it is determined that the acquired events satisfy the trigger information set in advance on the creator side, the playback is switched from the music data B to the music data B+α. Note that the music data B+α is music data obtained by adding an additional track α to the music data B which is the main track.

Furthermore, as illustrated on a right side of Fig. 1, in a case where the vehicle driven by the user approaches a landmark in the area 2 (in a case where the distance is within a predetermined distance), the music data B+β is played back. That is, in a case where the user side acquires an event of traveling near the landmark in the area 2, and it is determined that the acquired event satisfies trigger information set in advance on the creator side, the playback is switched from the music data B+α to music data B+β. Note that the music data B+β is music data obtained by adding an additional track β different from the additional track α to the music data B which is the main track. Instead of adding a track, for example, a process of imparting an arbitrary music effect such as imparting a reverb process to the vocal of the main track may be performed on the playback sound of the music data B.

The playback control of the music data is performed on the basis of a music generation parameter set in advance on the creator side. In addition to such playback control, the creator can arbitrarily set what kind of playback control is performed on the user side when what kind of event is detected on the user side. For example, the content of playback control is set, such as setting Tokyo Tower as a landmark, increasing a volume as a distance to Tokyo Tower approaches, and performing localization processing or panning processing so as to localize a sound source in a direction of Tokyo Tower.

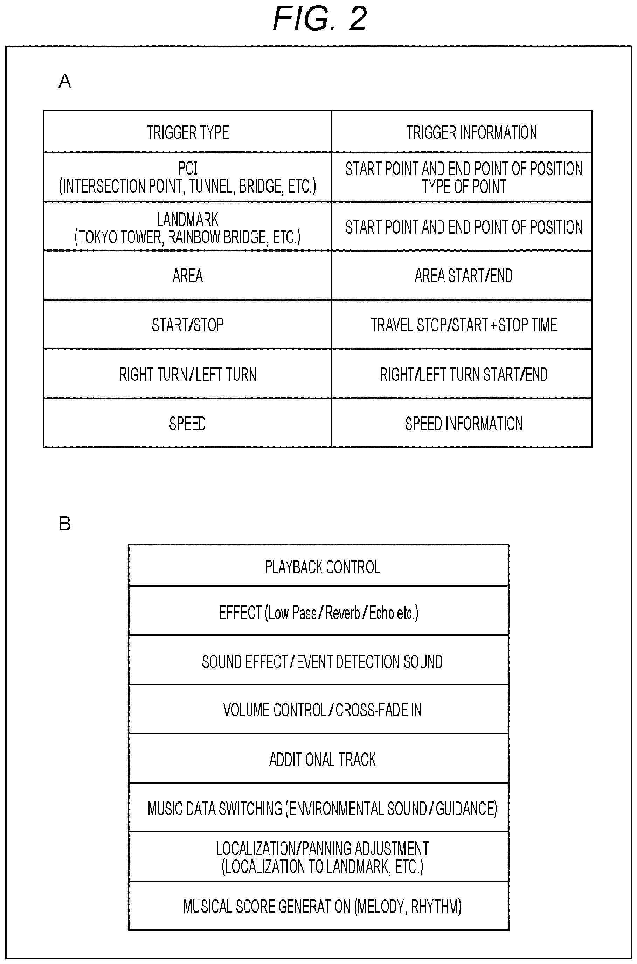

Fig. 2 is a diagram illustrating an example of trigger information preset on the creator side and playback control of music data.

A of Fig. 2 is a diagram illustrating an example of trigger information. The trigger information includes POI information indicating a start point and an end point of a specific point (an intersection, a tunnel, a bridge, or the like), landmark information indicating a start point and an end point of a landmark (Tokyo Tower, Rainbow Bridge, or the like), area information indicating start and end of each area, information indicating start and stop, stop time, start and end of a right or left turn, speed information, and the like.

B of Fig. 2 is a diagram illustrating an example of playback control of music data. Examples of the type of the music data playback control include effect processing (Low Pass Filter/Reverb/Echo or the like), output of a sound effect/event detection sound, volume control/crossfade in/out, addition of an additional track, content switching (environmental sound, guidance sound, etc.), localization/panning processing, musical score generation, and the like. It is not limited to these examples, and playback control of music data other than those described above can be set in advance on the creator side.

Note that the example of the playback control of the music data described here may be realized by the music generation parameter in which the trigger information and the music information set in advance on the creator side are associated with each other, or may be realized at the time of output on the user side.

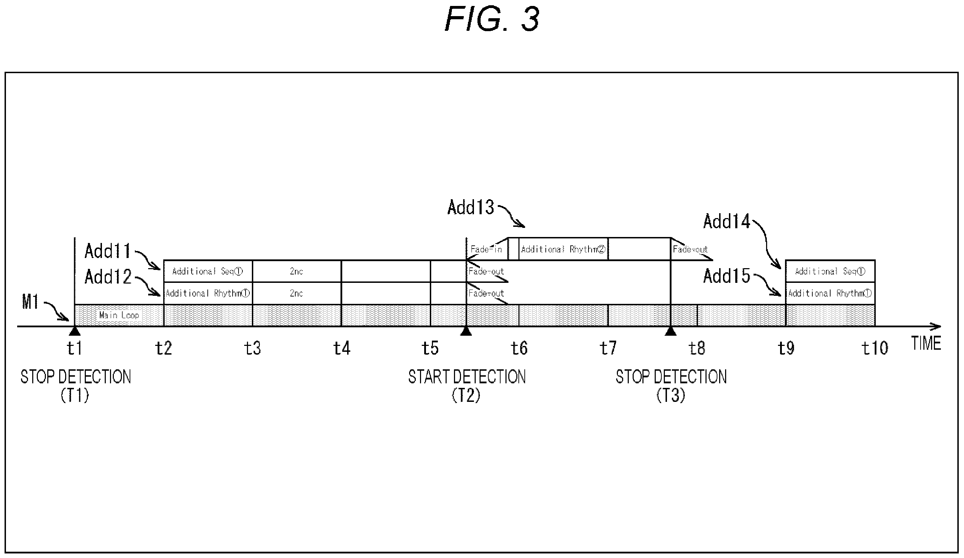

Fig. 3 is a diagram illustrating an example of playback control using an additional track.

The playback control of adding the additional track to the main track being played back in the example of the playback control of the music data described in Fig. 2 will be described with reference to Fig. 3. The main track and the additional track are music data of a predetermined time such as 10 seconds, 15 seconds, 4 bars, or 8 bars.

During traveling in a certain area, loop playback of a main track M1 allocated to the area is performed. In Fig. 3, each of the time from time t1 to time t2, the time from time t2 to time t3, the time from time t3 to time t4, and ... is a time required for one playback of the main track M1.

In a case where the vehicle stop is detected at the time T1 in a state where the playback of the main track M1 is being performed, additional tracks Add11 and Add12 are added to the main track M1 and played back at the time t2 which is the next playback start timing of the main track M1. In the example of Fig. 3, the additional track Add11 is a track for adding a change in sequence to the main track M1, and the additional track Add12 is a track for adding a change in rhythm to the main track M1. Note that the additional track is not limited to the above-described example, and is arbitrarily set on the creator side.

In this manner, as the additional track, a track having the same time as one playback time of the main track M1 is set in advance. The user listens to the playback sound of the main track M1 having an impression different from that during traveling while the vehicle is stopped. Note that the additional track may have a playback time different from that of the main track M1.

In the example of Fig. 3, a first playback of the main track M1 to which the additional tracks Add11 and Add12 are added is performed in a time period from the time t2 to the time t3, and a second playback of the main track M1 to which the additional tracks Add11 and Add12 are added is performed in a time period from the time t3 to the time t4. In addition, a third playback of the main track M1 to which the additional tracks Add11 and Add12 are added is performed during a time period from the time t4 to a time t5.

In a case where the start of the vehicle is detected at the time T2 during a fourth playback of the main track M1 to which the additional tracks Add11 and Add12 are added, an additional track Add13 is added to the main track M1 instead of the additional tracks Add11 and Add12.

The playback of the main track M1 to which the additional track Add13 is added is performed such that the playback sounds of the additional tracks Add11 and Add12 fade out after the time T2 and the playback sound of the additional track Add13 fades in instead. During a time period from a time t6 to a time t7, the first playback of the main track M1 to which the additional track Add13 is added is performed. The user listens to the playback sound of the main track M1 having an impression different from that of traveling or stopping immediately after the vehicle starts.

Thereafter, the second playback of the main track M1 to which the additional track Add13 is added is performed during a time period from the time t7 to a time t8. In a case where the stop is detected again at the time T3 during the second playback, the additional track Add13 fades out, and only the main track M1 is played back in a time period from the time t8 to a time t9.

Thereafter, in a time period from the time t9 to a time t10, playback of the main track M1 to which additional tracks Add14 and Add15 are added is performed. In a case where an event such as stop is detected at a timing advanced by a predetermined ratio or more of the time period required for one loop playback of the main track M1, the playback to which the additional track is added is performed in synchronization with the start timing of the next loop playback of the main track M1. Since the time T3 at which the stop is detected is a timing at which one playback of the main track M1 in the time period from the time t7 to the time t8 is advanced by a predetermined ratio such as 80% or more, the playback to which the additional tracks Add14 and Add15 are added is started at the time t9 which is the start timing of the next loop of the main track M1.

The additional track Add14 is a track for adding a change in sequence to the main track M1 similarly to the additional track Add11, and the additional track Add15 is a track for adding a change in rhythm to the main track M1 similarly to the additional track Add12. Note that the additional track Add11 and the additional track Add14, and the additional track Add12 and the additional track Add15 may be the same music data or different music data.

Thereafter, similarly, the loop playback of the main track M1 is continued by adding an additional track according to the situation of the vehicle. In this manner, the playback sound of the main track allocated to the area is presented to the user while sequentially changing the impression. The user can obtain a new music viewing experience by listening to the playback sound of the main track that changes according to his/her driving.

Note that, in the above-described example, an example in which the additional tracks Add11 and Add12 (or the additional tracks Add14, Add15) are simultaneously added to the main track M1 has been described. However, the present technology is not limited to this. For example, only one of the additional tracks Add11 and Add12 (or the additional tracks Add14, Add15) may be added to the main track M1, or playback control may be performed such that both or one of the additional tracks Add11 and Add12 (or the additional tracks Add14, Add15) is delayed by a predetermined number of bars and added to the main track M1.

Note that the additional track may include one material or may include a plurality of different materials.

Here, the above-described main track and the additional track include loop materials having a predetermined number of bars and playback time. Both the main track and the additional track may not include a loop material, or only one of the main track and the additional track may include a loop material.

### • Components of music data

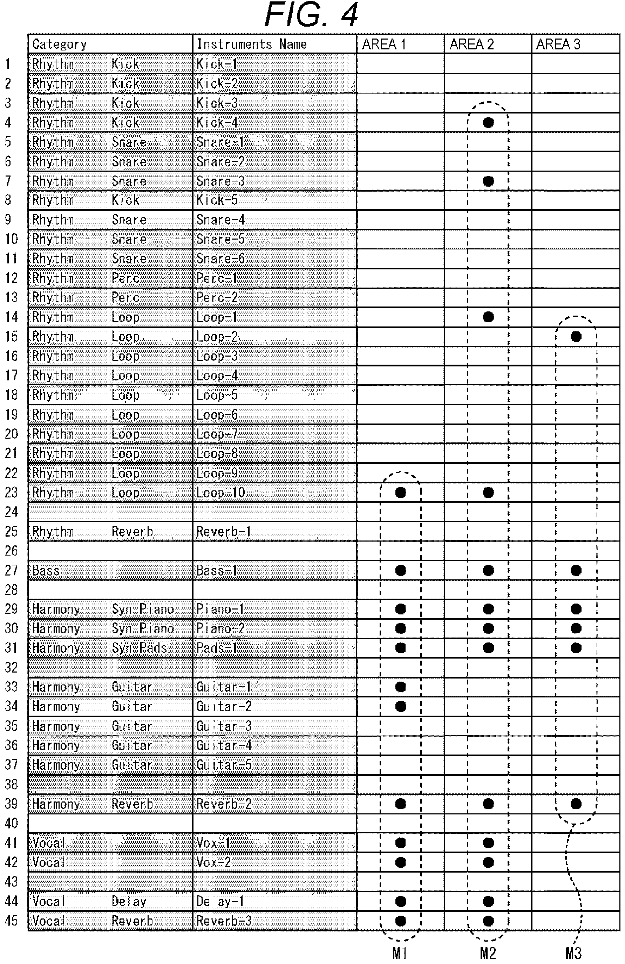

Fig. 4 is a diagram illustrating an example of components of music data.

As an example, a file of a track of each row of the first row to the 45th row is prepared by the creator side at the time of setting the music generation parameter. Here, as illustrated in the leftmost column, files of four types of tracks of Rhythm, Bass, Harmony, and Vocal are illustrated as an example. The second column from the left shows the name of each file.

The creator side selects a track configuring the main track from these tracks uploaded by the creator side in advance. Here, as an example, the track selected by the creator side is indicated by a black circle.

For example, as illustrated in the third column from the left, the main track M1, which is one main track, is configured using the tracks of the 23rd row, the 27th row, the 29th to 31st rows, the 33rd row, the 34th row, the 39th row, the 41st row, the 42nd row, the 44th row, and the 45th row as materials. The main track M1 including the tracks illustrated in Fig. 4 is the same track as the main track M1 described with reference to Fig. 3.

The main tracks M2 and M3 are also configured using tracks indicated by black circles in the fourth and fifth columns selected in a similar manner as materials. Each main track set in this way is allocated to an arbitrary area.

Note that the additional track described with reference to Fig. 3 is similarly set in advance. The additional track may be set by selecting the same track as the track configuring the main track, or the additional track may be set by selecting a track different from the track configuring the main track.

In addition, the main track may be set by designating a specific section of the existing music uploaded in advance instead of selecting from the components (materials) registered in advance. In a case where the main track is set using the existing music, for example, the number of bars of the main track, the playback time of the main track, and information such as a start position, an end position, and a playback time of a section that can be used as the main track (loop material) among the sections configuring the existing music are set in advance on the creator side.

The outline of the present technology has been described above. Hereinafter, embodiments of the present technology will be described in more detail.

### <Example of system configuration>

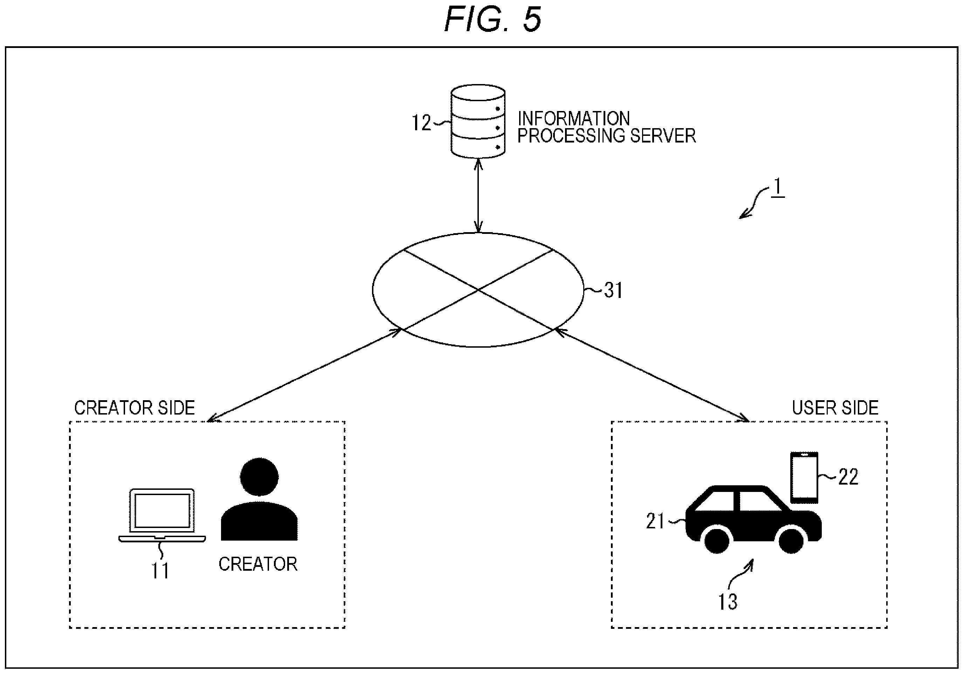

Fig. 5 is a diagram illustrating a configuration example of the information processing system 1 according to an embodiment of the present technology.

The information processing system 1 includes a creator terminal 11 which is a configuration on the creator side, an information processing server 12, and a music data playback system 13 which is a configuration on the user side.

As an example, the music data playback system 13 includes a vehicle 21 driven by the user and a user terminal 22 installed in the vehicle 21. The user terminal 22 is, for example, a smartphone.

The creator terminal 11, the information processing server 12, and the music data playback system 13 are communicably connected to each other through a network 31. The network 31 is constructed by, for example, the Internet or a wide area communication network. In addition, an arbitrary wide area network (WAN), local area network (LAN), or the like may be used as the network 31, and a protocol for constructing the network 31 is not limited.

### • Configuration of creator terminal

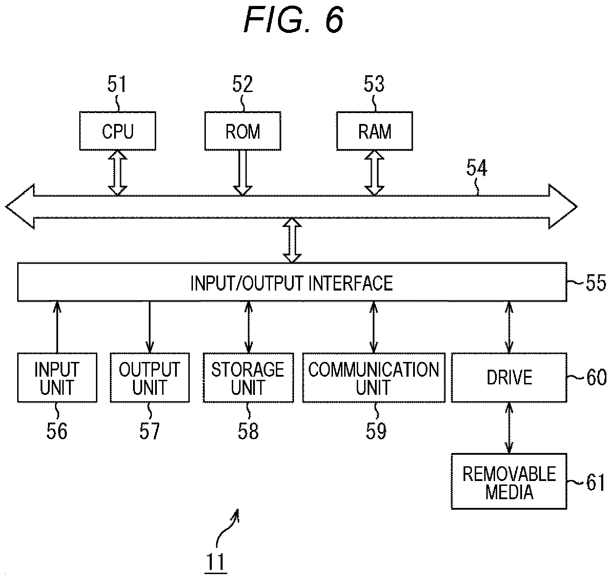

Fig. 6 is a block diagram illustrating a hardware configuration example of the creator terminal 11.

As illustrated in Fig. 6, the creator terminal 11 includes a computer such as a PC. The creator terminal 11 includes a central processing unit (CPU) 51, a read only memory (ROM) 52, a random access memory (RAM) 53, an input/output interface 55, and a bus 54 that connects these components to each other.

An input unit 56, an output unit 57, a storage unit 58, a communication unit 59, a drive unit 60, and the like are connected to the input/output interface 55.

The input unit 56 is, for example, a keyboard, a pointing device, a touch panel, or another operation device. In a case where the input unit 56 includes a touch panel, the touch panel can be integrated with the output unit 57.

The output unit 57 includes a display device and a speaker. The display device using liquid crystal, EL, or the like configuring the output unit 57 displays various screens such as a screen used by the creator at the time of setting the music generation parameter.

The storage unit 58 is a nonvolatile storage device, and is, for example, an HDD, a flash memory, or another solid state memory.

The communication unit 59 is a communication module for communicating with other devices through the network 31. The communication unit 59 may communicate by using either wired or wireless communication.

The drive unit 60 is a device capable of driving a removable recording medium 61, for example, an optical recording medium, a magnetic recording tape, or the like.

Information processing by the creator terminal 11 having the above hardware configuration is realized by cooperation of software stored in the storage unit 58, the ROM 52, or the like and hardware resources of the creator terminal 11. Specifically, the information processing method according to the present technology is implemented by loading a program configuring software stored in the ROM 52 or the like into the RAM 53 and executing the program.

The program is installed in the creator terminal 11 through, for example, the removable recording medium 61. Alternatively, the program may be installed in the creator terminal 11 through a global network or the like. In addition, any non-transitory storage medium readable by the creator terminal 11 may be used.

Note that the information processing server 12, which is a server on the cloud, has the same configuration as the configuration of the creator terminal 11 as illustrated in Fig. 6. The information processing server 12 may be configured by a plurality of computers.

### • Configuration of user terminal

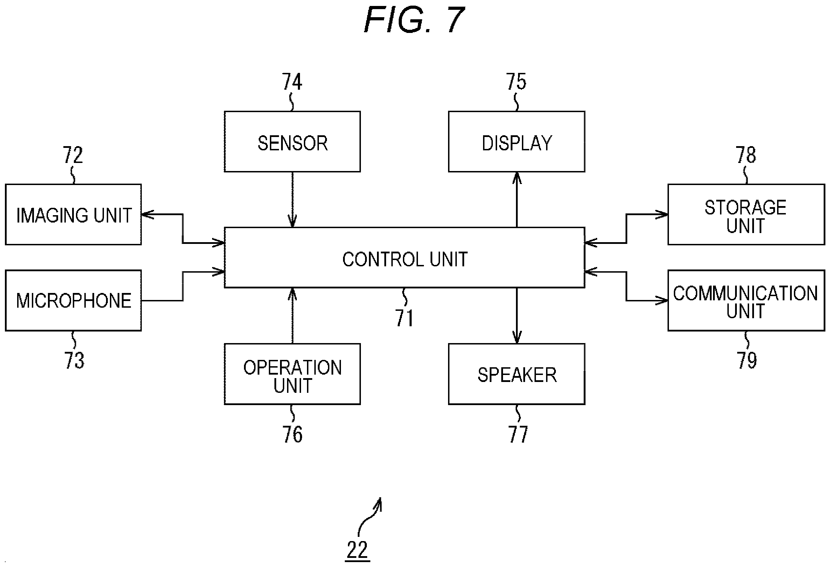

Fig. 7 is a block diagram illustrating a hardware configuration example of the user terminal 22 configuring the music data playback system 13.

The user terminal 22 is configured in such a manner that an imaging unit 72, a microphone 73, a sensor 74, a display 75, an operation unit 76, a speaker 77, a storage unit 78, and a communication unit 79 are connected to a control unit 71.

The control unit 71 includes a CPU, a ROM, a RAM, and the like. The control unit 71 executes a predetermined program and controls the entire operation of the user terminal 22 according to the operation of the user. The user terminal 22 including the control unit 71 functions as a sensing device that senses the current position of the vehicle 21 driven by the user, the acceleration of a vehicle body, steering wheel operation, and the like. Furthermore, since the user terminal 22 includes the speaker 77, the user terminal may function as an output device that outputs a playback sound of music data.

The imaging unit 72 includes a lens, an imaging element, and the like, and performs imaging under the control of the control unit 71. The imaging unit 72 outputs image data obtained by imaging to the control unit 71. For example, in a tunnel, between high-rise buildings, in a mountain area, or the like where it is difficult for the GPS to function, the current position can be acquired on the basis of the image data obtained by the imaging unit 72 instead of acquiring the current position by the GPS.

The microphone 73 supplies data of the collected sound to the control unit 71.

The sensor 74 includes a GPS sensor (positioning sensor), an acceleration sensor, a gyro sensor, and the like. The sensor 74 measures the current position, speed, acceleration, and the like of the vehicle 21 driven by the user, and outputs sensor data indicating the measurement result to the control unit 71. For example, in the control unit 71, it is detected that the steering operation has been performed on the basis of the current position, acceleration, and the like, and events such as turning right or left or turning on a curve of the vehicle 21 are acquired.

The display 75 includes a liquid crystal display (LCD) or the like, and displays various types of information such as a menu screen and an image being captured under the control of the control unit 71. For example, an area currently traveling and music data associated with the area may be displayed in a playlist format.

The operation unit 76 includes an operation button, a touch panel, or the like provided on a surface of a housing of the user terminal 22. The operation unit 76 outputs information indicating the content of the operation by the user to the control unit 71.

The speaker 77 outputs a sound on the basis of the playback signal of the music data supplied from the control unit 71.

The storage unit 78 includes a flash memory or a memory card inserted into a card slot provided in the housing. The storage unit 78 stores various data such as image data supplied from the control unit 71. In addition to the image data, for example, information indicating how many rounds the user has made on the landmark may be recorded, and the playback control of the music data may be made different depending on the week.

The communication unit 79 performs wireless or wired communication with an external device such as the information processing server 12.

### • Functional configuration

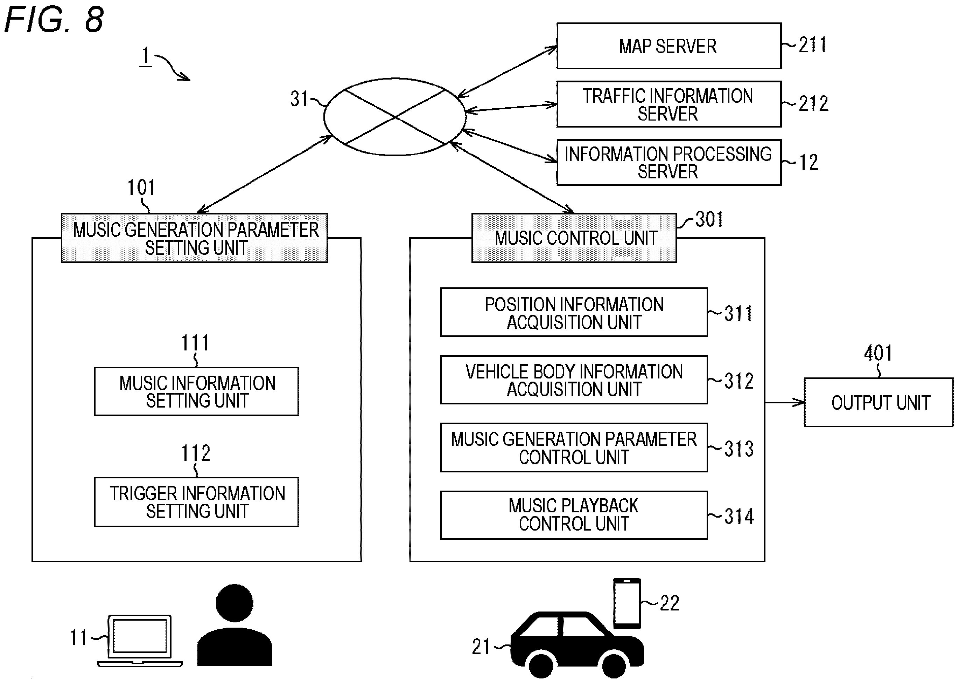

Fig. 8 is a block diagram illustrating a functional configuration example of the information processing system 1.

As illustrated in Fig. 8, a music generation parameter setting unit 101 is realized in the creator terminal 11 of the information processing system 1. The music generation parameter setting unit 101 includes a music information setting unit 111 and a trigger information setting unit 112.

On the other hand, a music control unit 301 is implemented in the music data playback system 13 of the information processing system 1. The music control unit 301 includes a position information acquisition unit 311, a vehicle body information acquisition unit 312, a music generation parameter control unit 313, and a music playback control unit 314.

Here, the position information acquisition unit 311 and the vehicle body information acquisition unit 312 function as an event acquisition unit that acquires an event occurring on the user side. Note that, hereinafter, the functions of the position information acquisition unit 311 and the vehicle body information acquisition unit 312 will be individually described not as the event acquisition unit but as the position information acquisition unit 311 and the vehicle body information acquisition unit 312. Note that the event includes, in addition to an event in a case where the user is in a moving object such as a vehicle, an event that occurs in a case where the user is not in the moving object (such as at the time of walking).

Here, the music control unit 301 may be realized in any one of the vehicle 21 or the user terminal 22 configuring the music data playback system 13, or may be realized by the vehicle 21 and the user terminal 22 operating in cooperation. As an example in which the vehicle 21 and the user terminal 22 operate in cooperation, for example, the vehicle body information acquisition unit 312 is realized by the vehicle 21, and the position information acquisition unit 311 is realized by the user terminal 22.

The music information setting unit 111 of the music generation parameter setting unit 101, which is a configuration of the creator terminal 11, for example, sets music information associated with music data to be used for each area according to an operation by the creator. Details of the music information will be described later.

In the trigger information setting unit 112, trigger information defining a condition serving as a trigger when the playback control of the music data is executed is set according to an operation by the creator. Details of the trigger information will be described later.

The music generation parameter setting unit 101 sets the music generation parameter on the basis of the music information set by the music information setting unit 111 and the trigger information set by the trigger information setting unit 112. For example, information in which music information and trigger information are associated with each other is set as the music generation parameter. The music generation parameter setting unit 101 transmits the music generation parameter to the information processing server 12 through the network 31.

In the information processing server 12, the music generation parameter transmitted from the music generation parameter setting unit 101 is stored and managed in the database. In addition to the music generation parameter, various types of information such as a file of a track uploaded from the creator terminal 11 are managed in the information processing server 12. Information such as music generation parameters managed by the information processing server 12 is supplied to the music data playback system 13 at a predetermined timing. For example, a plurality of music generation parameters associating various music information with trigger information is provided to the music data playback system 13.

In addition to the information processing server 12 that stores and supplies music generation parameters, various external databases such as a map server 211 and a traffic information server 212 may be connected to the network 31.

The position information acquisition unit 311 of the music control unit 301, which is a configuration of the music data playback system 13, acquires the position information on the vehicle 21 driven by the user on the basis of, for example, sensor data (for example, GPS data) acquired from the sensor 74 built in the user terminal 22.

The vehicle body information acquisition unit 312 acquires the vehicle body information on the vehicle 21 driven by the user on the basis of the sensor data (for example, speed data, acceleration data, and the like) acquired from the sensor 74. Here, the vehicle body information is, for example, information indicating start/stop, acceleration/deceleration, right/left turn, turning on a steering wheel at a curve, and the like when the vehicle 21 is actually traveling.

The music generation parameter control unit 313 performs control based on the vehicle body position information acquired by the position information acquisition unit 311 and the vehicle body information acquired by the vehicle body information acquisition unit 312 with respect to the music generation parameter transmitted from the music generation parameter setting unit 101 or the information processing server 12 through the network 31.

For example, consider a case where a music generation parameter indicating content of playback control of "Add additional track to main track in arpeggio format when turning right or left at specific intersection I" is set in advance in the creator terminal 11.

In this example, trigger information on "specific intersection I" and "right/left turn", and an algorithm of "adding an additional track to the main track in an arpeggio format" are associated with each other and set as the music generation parameter.

In this case, in order to determine whether or not to satisfy the condition defined by the trigger information, position information for determining whether or not the vehicle 21 driven by the user has entered the "specific intersection I" and vehicle body information for determining whether or not the vehicle has "turned right or left" are required, and these are acquired in real time by the sensor 74 of the user terminal 22 set in the vehicle 21. As described above, the position information is acquired on the basis of sensor data measured by a GPS sensor (positioning sensor) or the like, and the vehicle body information is acquired on the basis of sensor data measured by an acceleration sensor or a gyro sensor. Note that the vehicle body information may be acquired using a sensor mounted on the vehicle 21 instead of the sensor mounted on the user terminal 22.

In a case where sensor data indicating that the vehicle 21 has entered a "specific intersection I" and has turned right or left is detected and acquired as an event, a condition defined by the trigger information described above is satisfied, and playback control based on an algorithm of adding an additional track to the main track being played back in an arpeggio format is performed.

On the other hand, in a case where the vehicle turns right or left at an intersection different from the intersection I, or in a case where the vehicle enters a specific intersection I but goes straight instead of turning right or left, the acquired event does not satisfy the condition defined by the trigger information described above, and thus, the playback control of adding the additional track to the main track being played back in the arpeggio format is not performed. Instead, for example, in a case where the music generation parameter in which the trigger information on "going straight at the specific intersection I" and the algorithm of "adding the additional track of the synthesizer to the main track" are associated with each other is also set, the playback control of adding the additional track of the synthesizer to the main track being played back and performing playback is performed according to the event that the vehicle 21 "goes straight at the specific intersection I".

Note that the example in which the playback control of the music data is performed only in a case where the event acquired on the user side satisfies the condition defined by the trigger information set in advance on the creator side has been described. However, there may be a case where a case that cannot be predicted at the time of setting on the creator side may occur. Therefore, even in a case where the event acquired on the user side does not satisfy the condition defined by the trigger information set in advance on the creator side, the music generation parameter control unit 313 may appropriately control the music generation parameter as long as it does not deviate from the setting on the creator side, or such setting may be performed in advance on the creator side. The control of the music generation parameter is, for example, processing of changing a content generation parameter set in advance on the creator side.

The music playback control unit 314 performs playback control on the music data based on the music generation parameter controlled by the music generation parameter control unit 313.

In a case where the music generation parameter set in advance on the creator side is controlled by the music generation parameter control unit 313, the music playback control unit 314 performs playback control based on the controlled music generation parameter. On the other hand, in a case where the music generation parameter set in advance on the creator side is not controlled by the music generation parameter control unit 313, the music playback control unit 314 performs playback control based on the music generation parameter set in advance on the creator side.

An output unit 401 outputs the music data whose playback is controlled by the music playback control unit 314. Note that the output unit 401 is, for example, an in-vehicle audio system of the vehicle 21 driven by the user or the speaker 77 built in the user terminal 22 set in the vehicle, but is not limited thereto, and may be an external speaker or the like. Furthermore, the music playback control unit 314 may include the output unit 401. The music playback control unit 314 and the output unit 401 are connected in a wired or wireless manner, and in the case of wireless connection, various protocols such as Bluetooth (registered trademark) and Wi-Fi (registered trademark) may be used.

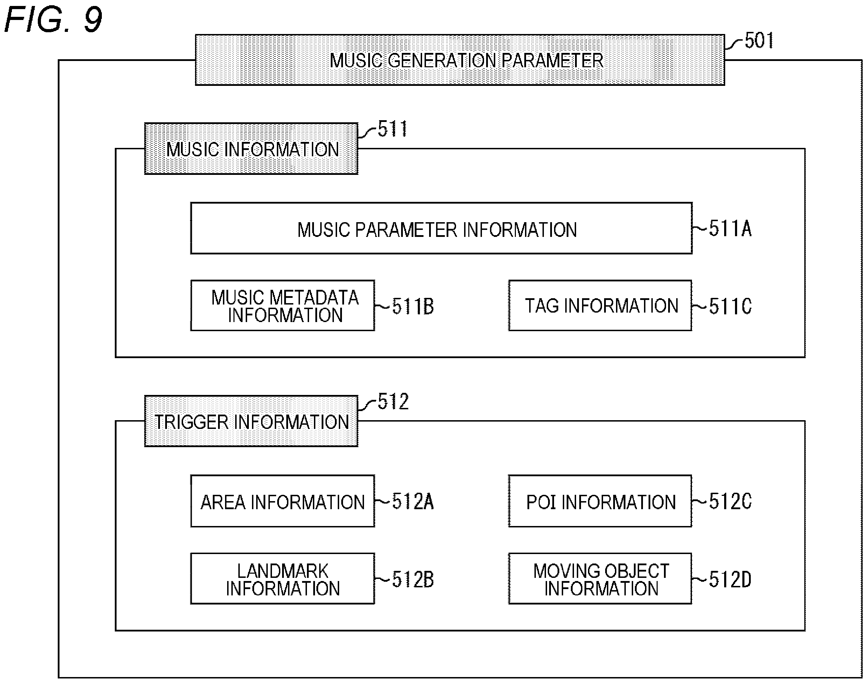

Fig. 9 is a diagram illustrating a data structure of a music generation parameter 501 set by the music generation parameter setting unit 101 in Fig. 8.

As illustrated in Fig. 9, the music generation parameter 501 includes a music information 511 and a trigger information 512 associated with each other.

The music information 511 is music information set by the music information setting unit 111. The music information 511 includes music parameter information 511A, music metadata information 511B, and tag information 511C.

The music parameter information 511A is information associated with an algorithm indicating what kind of playback control is to be performed on the music data associated with each area. For example, the music parameter information 511A indicates an algorithm such as "adding an additional track to the main track in an arpeggio format" or "increasing a volume of the main track in proportion to a speed" as described above.

The music metadata information 511B is, for example, information indicating attributes of music data such as a key, a beat, a beats per minute (BPM), a code, and a playback time of the music data. Not limited to this, for example, tonality information, instrument type information, and the like may be included in the music metadata information 511B. Furthermore, in a case where the music data is object audio data, position data of each object configuring the music data may be included as the music metadata information 511B. What kind of data is designated in the music metadata information 511B can be set in advance on the creator side.

The tag information 511C is, for example, information designating which main track and additional track are allocated to each set area. Here, in a case where there is a plurality of additional tracks allocated to each area, the additional tracks may be associated as one group. Note that information different from the information designating the track may be set as the tag information.

The trigger information 512 is trigger information set by the trigger information setting unit 112. The trigger information 512 includes area information 512A, landmark information 512B, POI information 512C, and moving object information 512D.

The area information 512A is information associated with an area set on the map on the creator side. For example, information on a start position and an end position (A of Fig. 2) of the area is set as the area information 512A. A large area (corresponding to a scene to be described later) including a plurality of areas may be set as the area information 512A. As will be described in detail later, the creator can set an area having an arbitrary shape on a display screen such as a graphical user interface (GUI), for example.

The landmark information 512B is information indicating a landmark such as Tokyo Tower or Rainbow Bridge. The creator can also set an arbitrary building such as a temple and shrine or school as a landmark.

The POI information 512C is information indicating a specific point other than the above-described area or landmark. For example, an intersection, a tunnel, a bridge (A of Fig. 2), and the like are set as specific points indicated by the POI information 512C. Which intersection, tunnel, bridge, or the like is set as the specific point may be arbitrarily set on the creator side, or may be set on the basis of information published on a database of an external service such as Google Map (registered trademark).

The moving object information 512D is information associated with a specific event based on the position information. For example, as illustrated in A of Fig. 2, it is information associated with a moving object such as the vehicle 21 driven by the user, such as start/stop, stop time, right/left turn, and speed.

### <Processing in creator terminal>

### • Example of setting screen

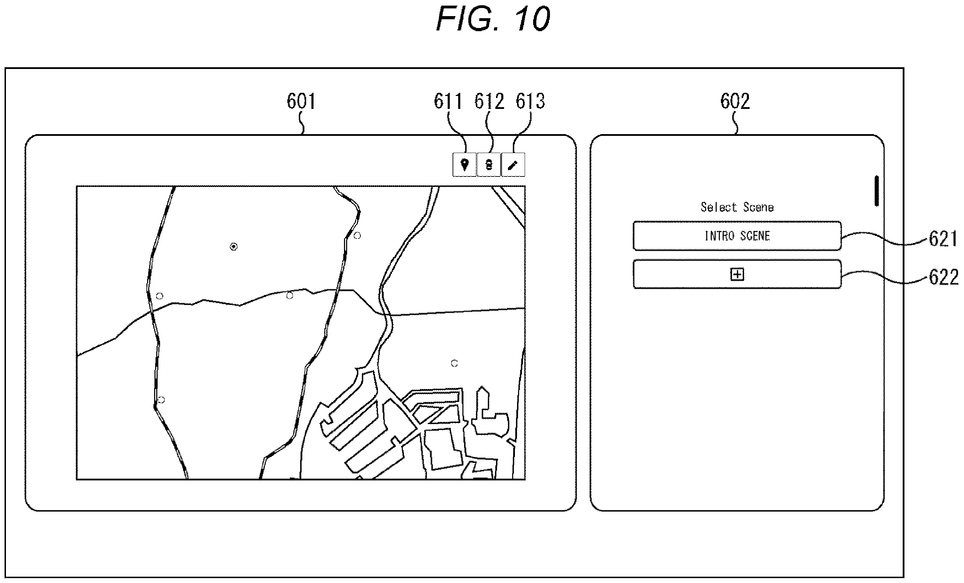

Next, a series of operations performed on the screen by the creator will be described with reference to Figs. 10 to 22. As described above, the series of operations performed on the setting screen by the creator is an operation of setting the music generation parameter using, for example, a GUI or the like by associating the trigger information defining the condition serving as the trigger when the music data playback control is executed with the algorithm defining various contents regarding the playback control. The setting screen may be displayed on a display configuring the output unit 57 of the creator terminal 11, or may be displayed on an external display connected to the creator terminal 11.

Figs. 10 to 20 are diagrams illustrating display examples of setting screens displayed on the creator terminal 11.

The setting screen includes an area setting unit 601 used to set an area and a detail setting unit 602 used to perform detail setting of each area set using the area setting unit 601. The area setting unit 601 displays a map of a range selected by the creator. The map displayed on the area setting unit 601 may be stored in advance in the creator terminal 11, or may be acquired from a database of an external service such as the above-described Google Map (registered trademark) through the network 31.

Fig. 10 is also a screen for adding (newly creating) a scene. Here, the scene is the large area described above. Since the large area includes a plurality of areas, it is more efficient to set individual areas in units of scenes (that is, large areas) than to set individual areas, and it is also effective in realizing scalability.

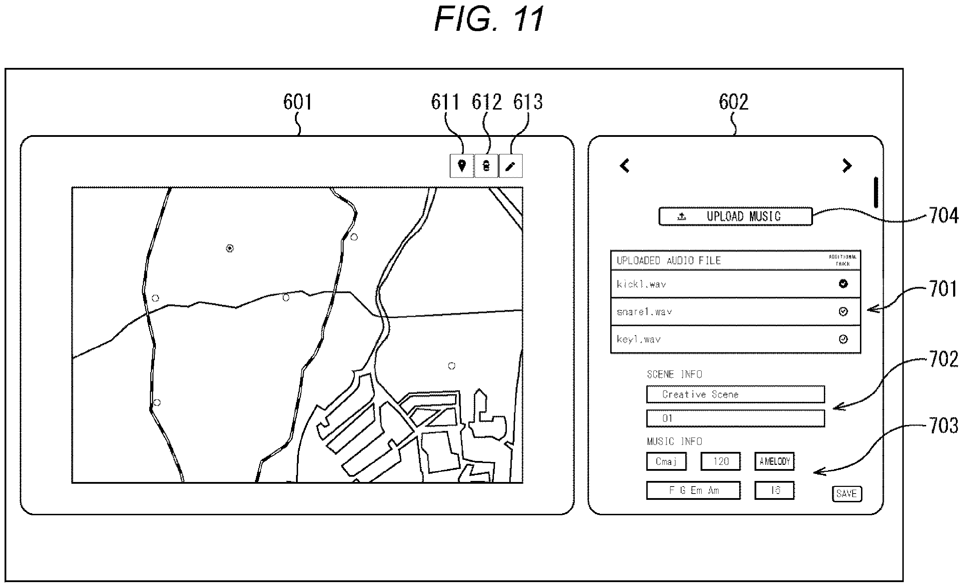

In a case where a scene addition tab 622 in the detail setting unit 602 is selected, the setting screen shifts to the screen of Fig. 11, which is a screen for performing detail setting of an additional scene. Note that an INTRO SCENE tab 621, which is a tab operated when selecting INTRO SCENE, which is a set scene, is displayed in the detail setting unit 602 of Fig. 10.

Fig. 11 is a diagram illustrating a screen after selection of the additional scene creation tab 622.

Setting of a scene to be added and setting of a main track and an additional track allocated to the scene to be added are performed using the screen of Fig. 11.

On the screen of Fig. 11, the creator inputs information associated with the scene to be added to a SCENE INFO 702, and inputs information associated with the main track allocated to the scene to be added to a MUSIC INFO 703. Here, the information input to the MUSIC INFO 703 is included in the music metadata information 511B described above.

In the SCENE INFO 702, the name and ID of the scene are input as information associated with the scene to be added. In Fig. 11, as an example, "Creative Scene" is input as the name of the scene, and "01" is input as the ID. The name of the scene can be arbitrarily set and changed.

In a production process in which a large number of scenes are generally set, allocating a name and an ID to a scene is useful not only for allowing a creator to easily distinguish between scenes but also when a plurality of creators collaboratively performs production activities. For example, the name "Creative Scene" is allocated as in Fig. 11, so that it becomes easy to estimate the property of the scene (what kind of main track is used, and the like) or the important scene among a plurality of set scenes, and efficient production that does not need to confirm the content for each scene becomes possible.

Subsequently, the creator selects an additional track to be used from the additional tracks indicated in a track list 701. The track list 701 indicates information on an additional track to be added to the main track at the time of playback control of the music data. The additional track is a component of the music data described with reference to Fig. 4. In the example of Fig. 11, files of three materials of kick, snare, and key are displayed in the track list 701.

Note that, in a case where the main track is set using the existing music or an additional track is added, the existing music or the additional track can be uploaded by selecting an upload tab 704. The upload tab 704 is a tab operated when a file of music data is uploaded.

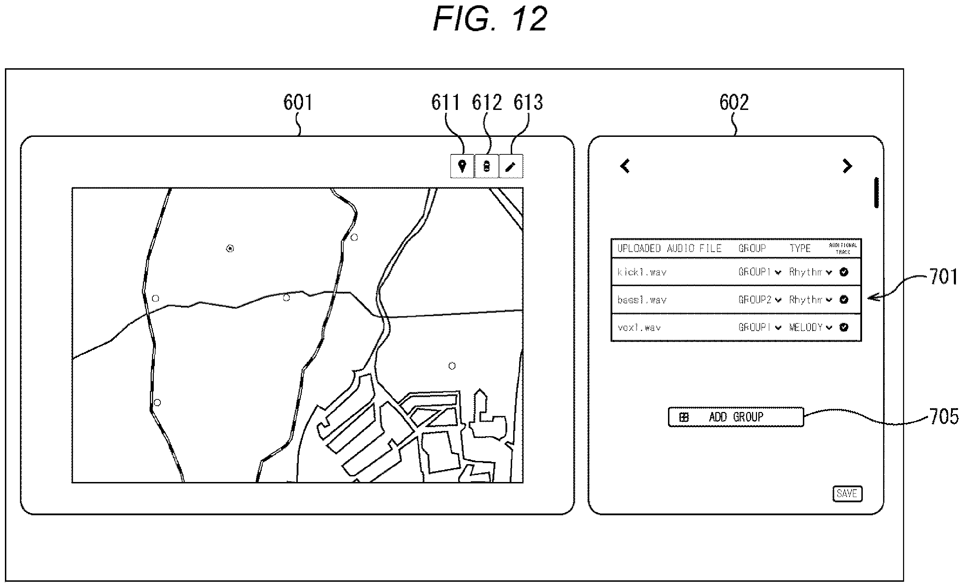

Fig. 12 is a diagram illustrating an example of a screen used to set grouping in a case where there is a plurality of additional tracks. In the example of Fig. 12, files of three materials of kick, bass, and vox are displayed in a grouped state in the track list 701. For example, kick and vox are set as materials of Group 1.

Similar to the scene described above, a plurality of additional tracks is generally used to implement various playback controls of music data, and grouping the additional tracks is more efficient in production than handling each additional track individually. The creator can set and confirm a combination of a plurality of additional tracks set by the creator.

If there is a combination of additional tracks created in advance in addition to the combination of the additional tracks selected in the track list 701, an upload button 705 may be selected and uploaded.

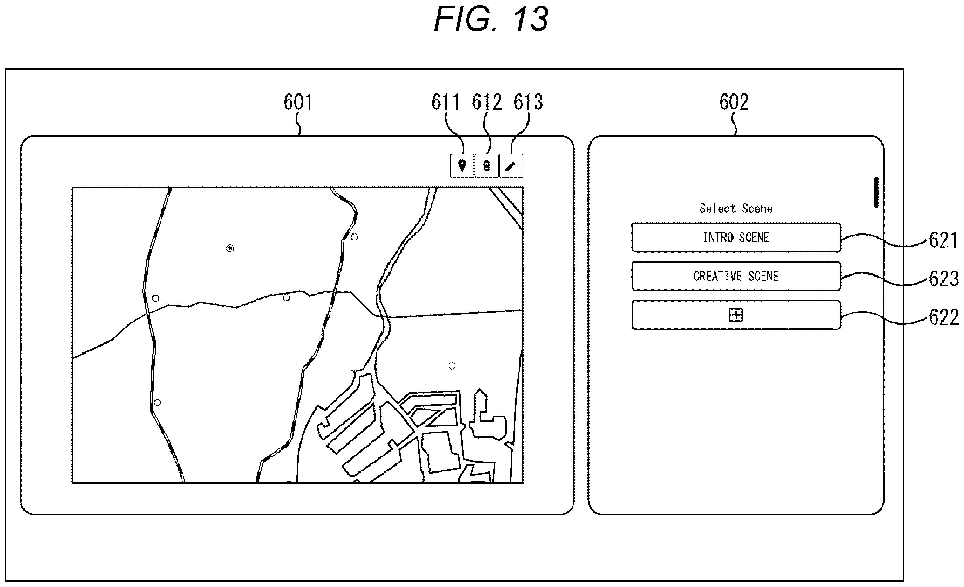

With performance of the above operation, the addition (new creation) of the scene ends. Fig. 13 is a diagram illustrating a screen after addition of one scene. In the detail setting unit 602, in addition to the INTRO SCENE tab 621, a Creative Scene tab 623 operated when an added "Creative Scene" scene is selected is added.

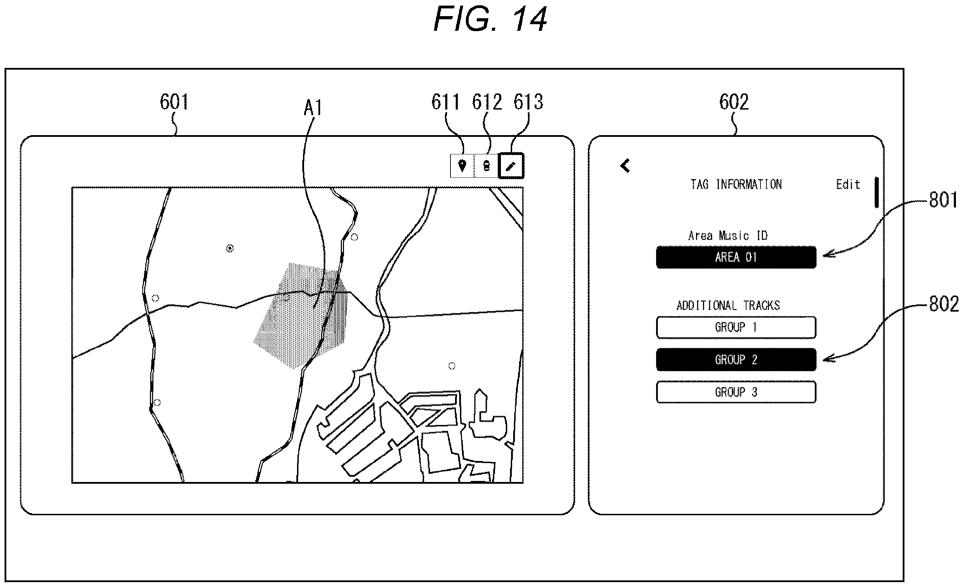

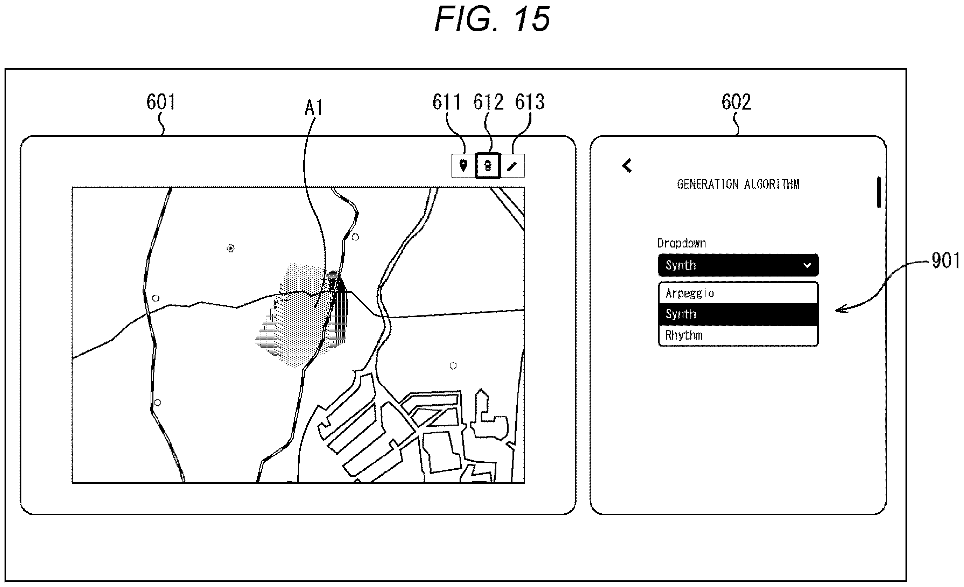

Subsequently, each area configuring the scene is set. It is also possible to individually set each area configuring the scene. In a case where the Creative Scene tab 623 in Fig. 13 is selected, the screens in Figs. 14 and 15 used to set each area configuring the "Creative Scene" scene are displayed.

Fig. 14 is a diagram illustrating a screen used for setting each area configuring a "Creative Scene" scene and setting TAG Information. As the TAG Information, for example, information on a main track and an additional track to be allocated to each area is set.

In a case where a button 613 of the area setting unit 601 is selected, an area A1 having an arbitrary size and shape is drawn on a map in the area setting unit 601. The creator can select a range of the area A1 on the map. In a case where the range of the area A1 is selected on the map, TAG Information indicating the main track and the additional track to be allocated to the area A1 can be set using the display of the detail setting unit 602.

Note that, in a case where there are two or more set areas, the areas may be displayed individually, or may be color-coded for easy identification. Furthermore, an area that the creator wants to handle intensively may be displayed distinguishably from other areas by being given some icon (star mark or the like) or being color-coded (normally, it is based on white, but for important areas, red, and the like.).

A main track allocated to the area A1 is set by using the display of an Area Music ID 801, and an additional track is set by using the display of Additional Tracks 802. An Area Music ID indicating a main track allocated to the area A1 and information indicating an additional track are set as TAG Information. In the example of Fig. 14, as an example, an Area Music ID of "Area 01" is set, and Group 2 (Fig. 12) is selected from Group 1 to Group 3 set as the group of the additional track. Here, the TAG Information is the tag information 511C (Fig. 9) described above.

The area setting on the map by the area setting unit 601 is arbitrarily set on the creator side using a device such as a mouse, for example. The area may be set by selecting an area having an arbitrary shape from among areas having a plurality of preset shapes.

Thereafter, in a case where a button 612 of the area setting unit 601 is selected, the setting screen shifts to a screen of Fig. 15 showing a screen used for setting an algorithm defining various contents related to playback control in the area A1.

Fig. 15 is a diagram illustrating a screen used for setting the algorithm in the area A1. The creator selects an algorithm to be used in the area A1 from an algorithm list 901 of the detail setting unit 602. In the algorithm list 901, names of selectable algorithms are displayed in a pull-down format, for example. In the example of Fig. 15, three types of algorithms of "Arpeggio" (arpeggio), "Synth" (synthesizer), and "Rhythm" (rhythm) are displayed. Note that the type of algorithm is not limited to this example. For example, two kinds or four or more kinds may be used.

Note that the trigger information related to the scene and the area is arbitrarily set by the creator using a screen (not illustrated).

Through the above operation, the setting of the trigger information and the setting of the algorithm regarding the scene and each area configuring the scene are completed. The music generation parameter is set by associating the trigger information with the algorithm.

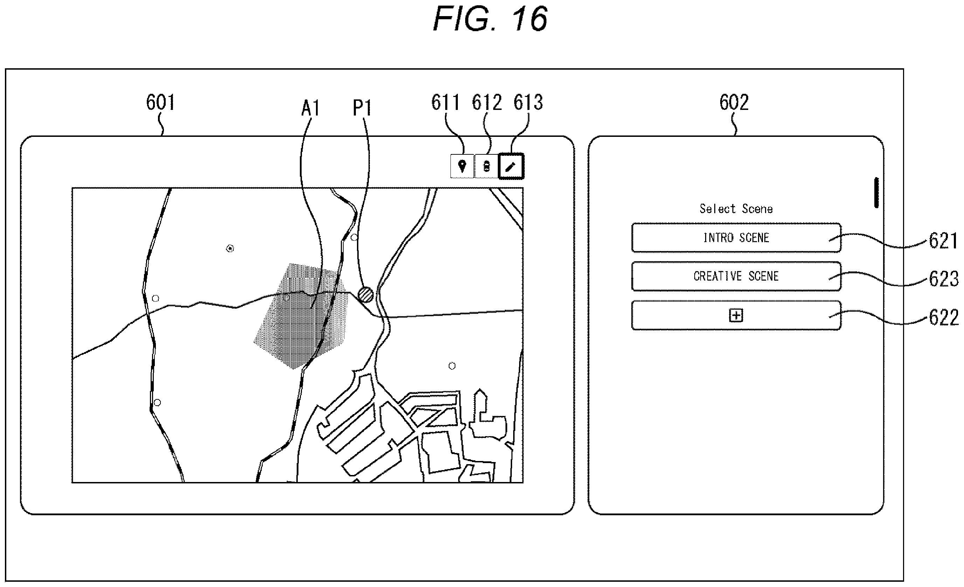

Next, an operation of setting the POI information will be described. Fig. 16 is a diagram illustrating an example of a screen related to setting of POI information. As described above, the POI information is information such as a start point and an end point regarding a specific point.

On the map of the area setting unit 601 on the screen of Fig. 16, a point P1 is displayed in addition to the area A1.

With selection of the button 613, the point P1 can be set at an arbitrary position on the map in the area setting unit 601. For example, the point P1 is set by clicking an arbitrary point on the map in the area setting unit 601 with a cursor in a state where the button 613 is selected.

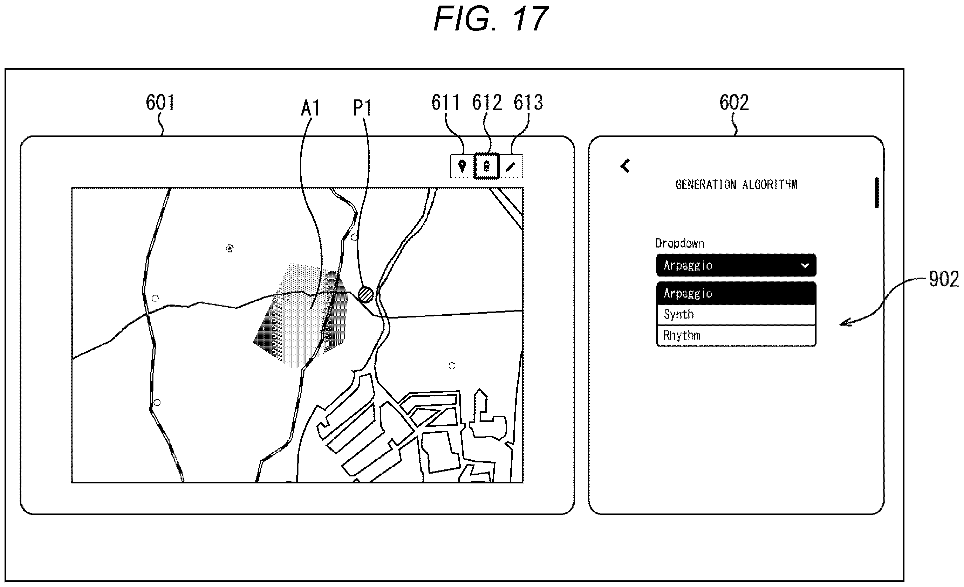

Thereafter, in a case where the button 612 is selected, the setting screen shifts to a screen of Fig. 17. In the screen of Fig. 17, an algorithm list 902 is displayed on the detail setting unit 602, similarly to the screen of Fig. 15. An algorithm defining various contents related to playback control at the point P1 is set by the creator using the algorithm list 902.

Note that, since the point P1 is a special point set by the creator, a parameter unique to the point P1 may be set.

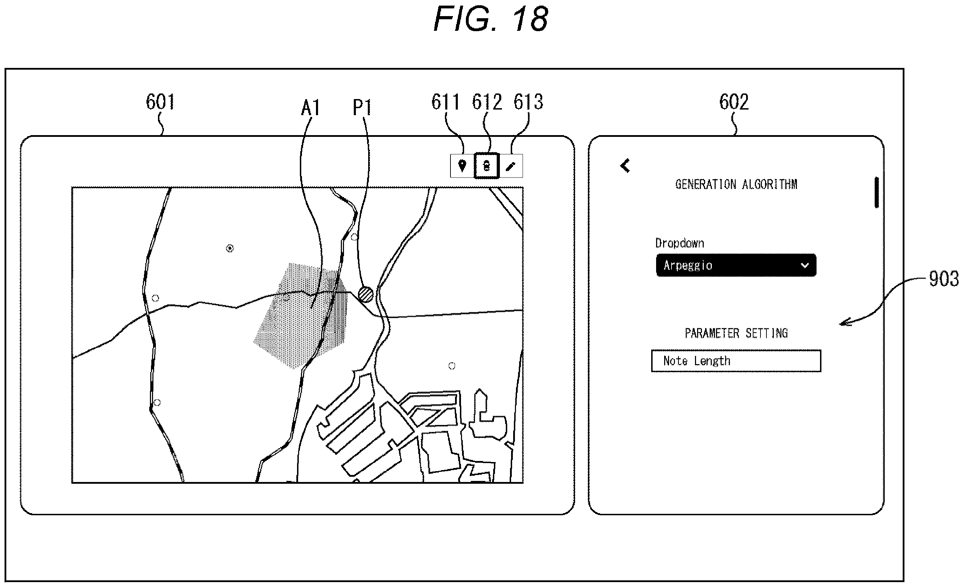

Fig. 18 is a diagram illustrating a state in which the algorithm of "Arpeggio" is selected from the algorithm list of the point P1. For example, a length of a note of the additional track to be played back in the arpeggio format and the like are set as parameters unique to the point P1 in addition to the algorithm, using the display of a PARAMETER SETTING 903 in Fig. 18. The length of the note is changed or a pause is appropriately added as a unique parameter, so that the creator can express various variations and can provide a music experience that the user is less likely to get bored.

Note that the trigger information related to the point P1 is arbitrarily set by the creator using a screen (not illustrated) similarly to the case of the scene and the area.

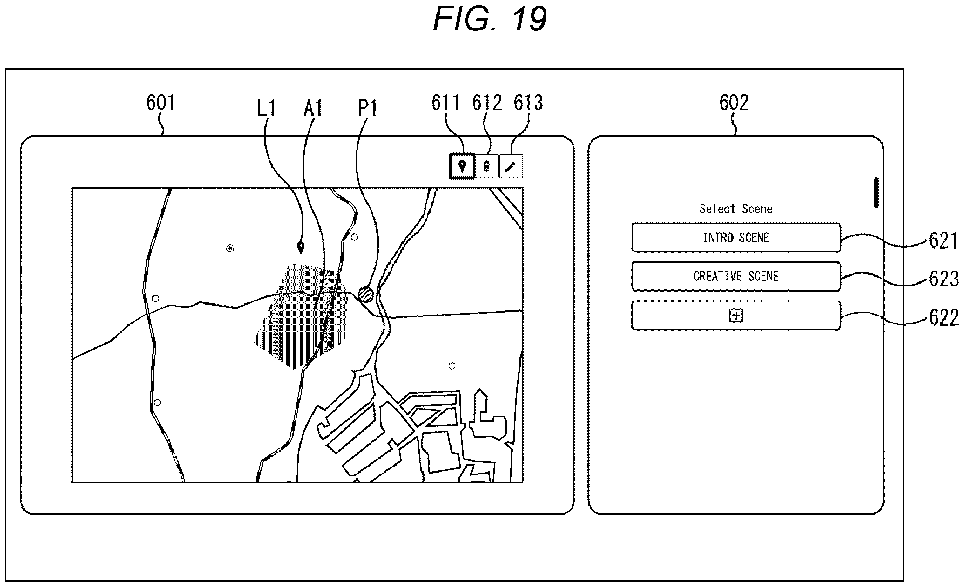

Next, an operation of setting a landmark will be described. Fig. 19 is a diagram illustrating an example of a screen related to setting of a landmark. As described above, the landmark is information such as a start point and an end point of a landmark such as Tokyo Tower or Rainbow Bridge.

A landmark L1 is displayed on the map of the area setting unit 601 on the screen of Fig. 19 in addition to the area A1 and the point P1.

A button 611 is selected so that the landmark L1 can be set at an arbitrary position on the map in the area setting unit 601. For example, the landmark L1 is set by clicking an arbitrary point on the map in the area setting unit 601 with a cursor while the button 611 is being selected.

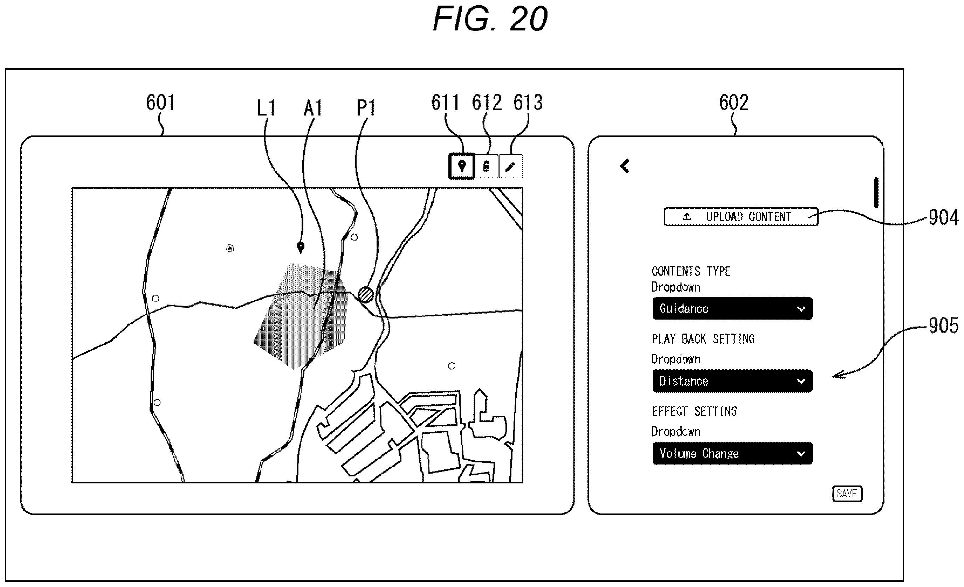

Thereafter, in a case where the landmark L1 is selected, the setting screen shifts to a screen in Fig. 20. In the screen of Fig. 20, an algorithm list 905 of the landmark L1 is displayed on the detail setting unit 602. An algorithm defining various contents related to playback control in the landmark L1 is set by the creator using the algorithm list 905.

Note that, as in the case of the area A1 and the point P1, the screen may be shifted to a screen for setting an algorithm defining various contents related to playback control in the landmark L1 by selecting the button 612. A screen transition method may be appropriately changed depending on a vendor of an application on the setting screen or a creator.

Here, in the algorithm list 905, the following three are set as an example. It is not limited thereto, and a creator may add or change an arbitrary parameter.
1. Type of additional track to be additionally played back when vehicle driven by user travels around landmark L1 (select Guidance in CONTENTS TYPE)
2. Processing based on distance between vehicle 21 driven by user and landmark L1 (select Distance by PLAYBACK SETTING)
3. Set change of volume as effect processing (select Volume Change by EFFECT SETTING)

As a result, for example, when the vehicle travels in the area where the landmark L1 exists, as a distance between the landmark L1 and the vehicle 21 driven by the user decreases, the volume of the main track gradually increases (to the extent that it does not damage the user's ear and does not make the user feel uncomfortable), and when the vehicle approaches the landmark L1, the user side can enjoy a music experience in which the main track is changed from the music data to the guidance voice related to the landmark L1.

As described above, since the landmark L1 is a special point set by the creator similarly to the point P1, a unique parameter is set for the landmark L1 similarly to the point P1, so that the creator can express various variations, and a music experience that the user is less likely to get bored can be provided. For example, the creator can provide music experiences such as "as approaching the landmark L1, reverb processing is applied only to the vocal of the main track" and "changing the type of guidance voice according to the number of times of passage through the landmark L1".

With provision of the music experience described above to the user side, value can be added to the daily drive experience. In addition, with the provision of the service to a company that operates a tourist bus or the like, the service can also be applied to tourist services such as a bus tour.

Here, each algorithm set using the display of the above-described algorithm lists 901, 902, and 905 is the above-described music parameter information 511A (Fig. 9). In addition, the unique parameter 903 at the point P1 and the unique parameter at the landmark L1 may be included in the music parameter information 511A.

Note that, in the examples of Figs. 10 to 20, as an example, the area setting unit 601 is on the left side of the display screen, and the detail setting unit 602 is displayed on the right side of the display screen. However, the arrangement of the screen is not limited thereto, and the left and right may be reversed, or may be changed to a desired arrangement on the creator side.

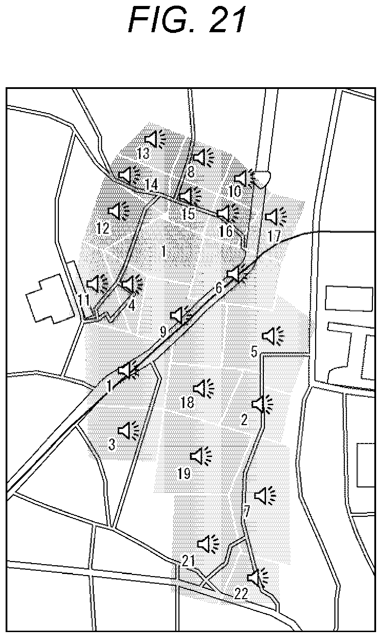

Fig. 21 is a diagram illustrating an example of a product in a series of operations of the creator using the setting screen.

In the example of Fig. 21, areas numbered 1 to 22 are set on the map. A number of each area corresponds to an Area Music ID, and a main track identified by the Area Music ID is displayed as an icon. As an example, the areas 1 to 22 may be collectively displayed as one scene (large area).

In addition, the main track may be played back by clicking an icon of a speaker in each area so that the creator can perform listening confirmation. Note that the shape of the icon is not limited thereto.

Each area may be displayed so as to be identifiable by the creator, for example, by color coding. Furthermore, in a case where there is a particularly important area, a favorite area, or the like, an icon such as a star mark may be added and displayed.

It is expected that each creator sets music generation parameters for many regions (for example, Tokyo and Osaka in Japan, New York and Paris in foreign countries, and the like) including foreign countries other than Japan. A product set for a specific region may be diverted to another region, or a product may be shared among creators. This makes it possible to increase production efficiency and realize scalability.

Therefore, a layout plan when a product produced in a specific region is diverted to another region may be displayed, or a layout plan produced in the past by an experienced creator may be selected in a pull-down format for a beginner creator.

### • Operation of creator terminal

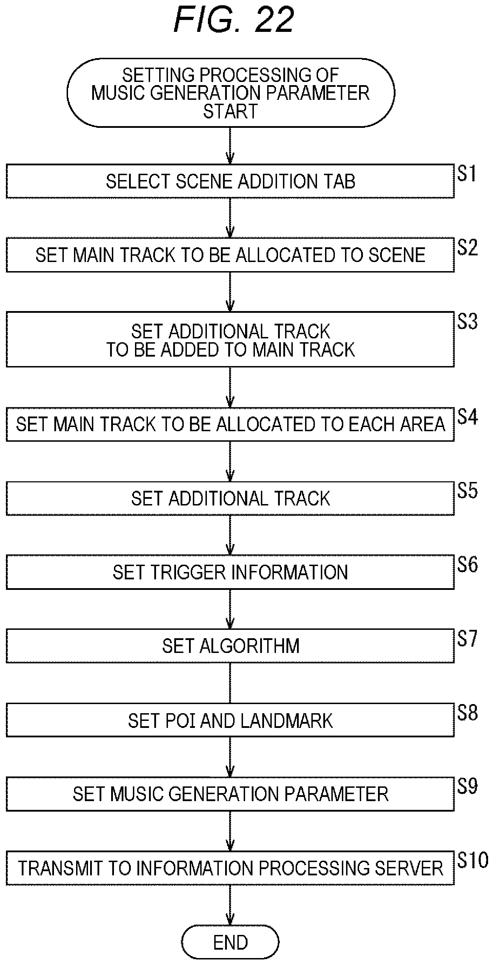

Fig. 22 is a flowchart regarding a series of operations performed by the creator using the setting screen. The processing of each step illustrated in Fig. 22 is performed by each unit of the music generation parameter setting unit 101 according to the operation of the creator (Fig. 8).

First, in step S1, the music generation parameter setting unit 101 receives selection of the scene addition tab 622 by the creator, and displays a screen to be used for setting the main track to be allocated to the scene (large area) to be added (newly created) and the additional track.

In step S2, the music information setting unit 111 sets information associated with the main track to be played back in the additional scene according to the creator's operation on the screen for performing the detail setting of the main track to be allocated to the additional scene.

In step S3, the music information setting unit 111 sets information associated with the additional track to be added to the main track set in step S2.

The addition (new creation) of the scene is completed by the processing of steps S1 to S3. Subsequently, the processing shifts to setting for each area configuring the scene.

In step S4, the music information setting unit 111 sets information associated with the main track for each area configuring the scene.

In step S5, the music information setting unit 111 sets information associated with the additional track to be added to the main track set in step S4. A single additional track may be set, or a group of a plurality of additional tracks may be set.

Through the processing of steps S4 and S5, the above-described TAG Information, that is, the tag information 511C is set.

In step S6, the trigger information setting unit 112 sets trigger information.

In step S7, the music information setting unit 111 sets the music parameter information according to the setting of the algorithm by the creator.

In step S8, the trigger information setting unit 112 sets the POI information and the landmark information indicating the setting contents according to the setting of the POI and the landmark by the creator. For the POI and the landmark set in step S8, setting of trigger information and setting of an algorithm are performed similarly to steps S6 and S7.

In step S9, the music generation parameter setting unit 101 sets the music generation parameter by associating the trigger information set for the scene, the area, the POI, and the landmark with the music information including the setting of the algorithm.

In step S10, the music generation parameter setting unit 101 transmits the music generation parameter set in step S9 to the information processing server 12 through the network 31. Thereafter, a series of processes related to the setting of the music generation parameter is completed.

The series of operations performed by the creator on the screen and the example of the screen displayed on the creator side have been described above with reference to Figs. 10 to 22.

### <Example of music data playback control on user side>

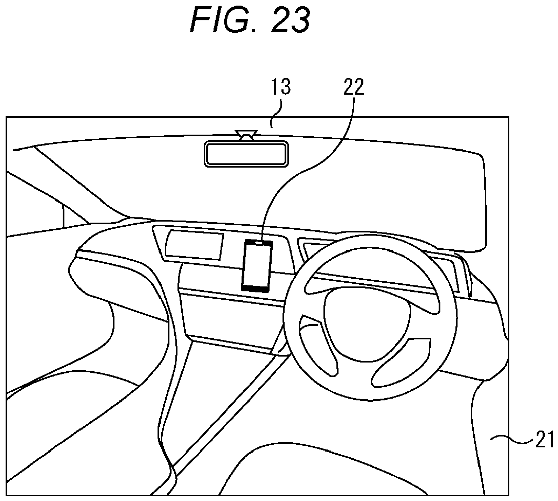

What kind of music data playback control is performed in the music data playback system 13 which is the configuration on the user side on the basis of the music generation parameter set in advance in the creator terminal 11 which is the configuration on the creator side will be described with reference to Figs. 23 to 31.

Fig. 23 is a diagram illustrating a playback space in the music data playback system 13.

The playback space is a space inside the vehicle 21 driven by the user as described above. As illustrated in Fig. 23, the user terminal 22 such as a smartphone is installed on a dashboard or the like in a vehicle interior space.

As described above, the playback-controlled music data may be output from the speaker 77 of the user terminal 22 or may be output from the audio system of the vehicle 21.

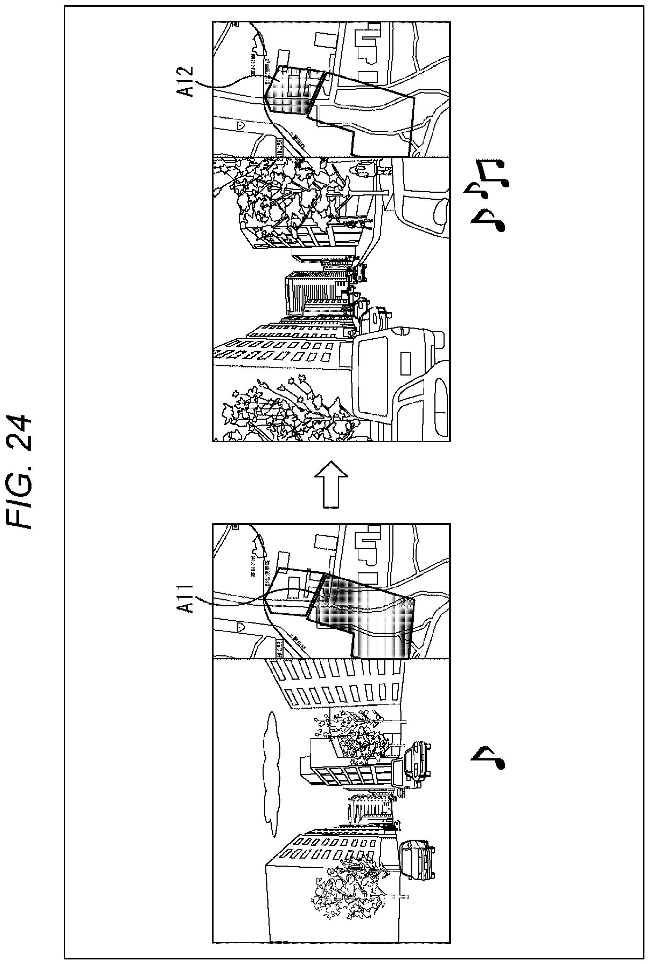

Figs. 24 to 30 are diagrams illustrating specific examples of playback control of music data in the music data playback system 13. As in the case of Fig. 1, the notes in Figs. 24 to 30 indicate that the playback sound (music) of the music data is output in the vehicle 21 while traveling in each area, point, or the like.

### • Specific example 1 of playback control

Fig. 24 is a diagram illustrating an example of playback control in a case where the traveling area is switched.

A landscape on the left side of Fig. 24 is a landscape in front of the vehicle 21 traveling in an area A11 illustrated on a map adjacent to the right. During traveling in the area A11, a playback sound of music data (main track) allocated to the area A11 is output into the vehicle as indicated by a note below the landscape.

As indicated by the tip of the arrow, in a case where the traveling area has been switched from the area A11 to an area A12, the playback control based on the switching of the area is performed, and the playback sound of the music data allocated to the area A12 is output into the vehicle. The landscape on the right side of Fig. 24 is a landscape in front of the vehicle 21 when the traveling area has been switched.

### • Specific example 2 of playback control

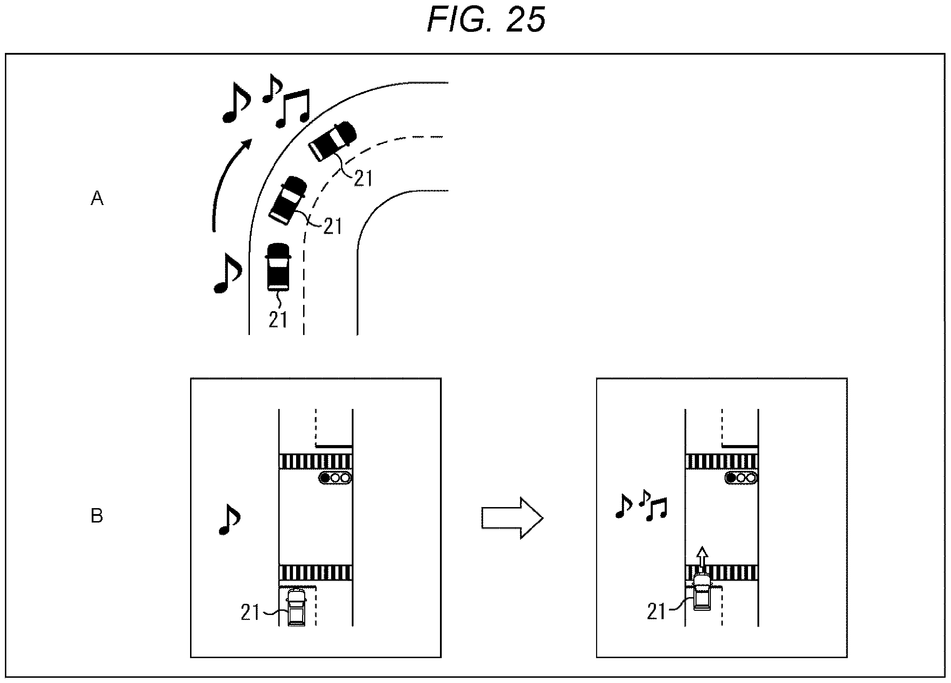

A of Fig. 25 is a diagram illustrating an example of playback control in a curve.

As illustrated in A of Fig. 25, in a case where a steering operation is performed on a curve, playback control is performed such that parameters such as volume are dynamically changed according to a steering operation amount. For example, as the curve is steeper, the volume of the additional track added to the main track becomes larger.

### • Specific example 3 of playback control

B of Fig. 25 is a diagram illustrating an example of playback control based on stop/start at an intersection or the like.

As illustrated in B of Fig. 25, for example, the playback control is performed such that the type of note configuring the additional track added to the main track is changed according to the acceleration at the start. For example, the greater the acceleration, the greater the proportion of the 16th notes or 32nd notes configuring the additional track, thereby being capable of providing the user with a sense of freshness.

### • Specific example 4 of playback control

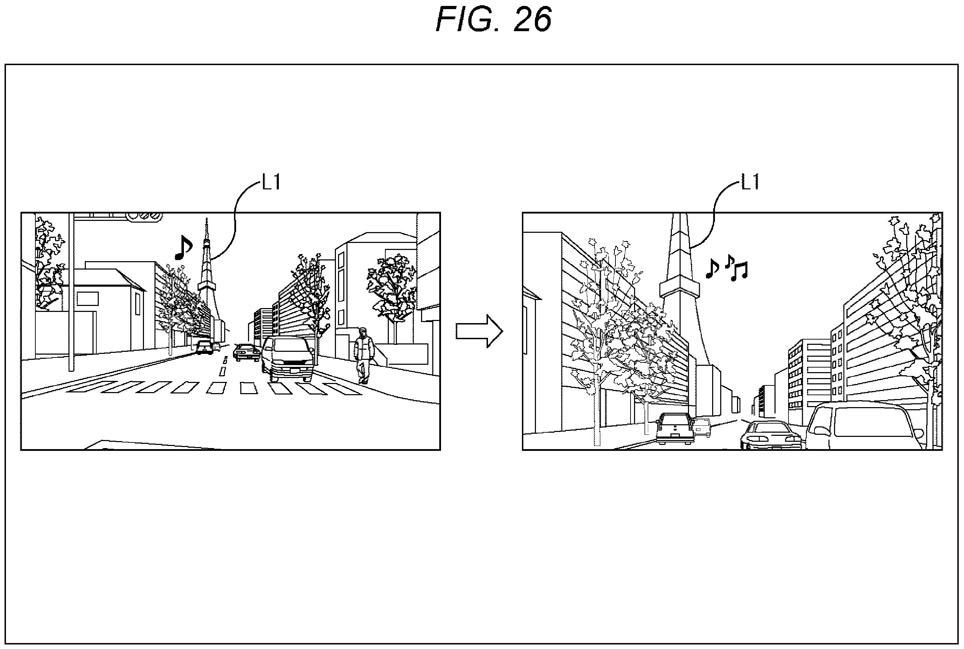

Fig. 26 is a diagram illustrating an example of playback control based on passage through a landmark.

Fig. 26 illustrates a landscape when approaching Tokyo Tower set as the landmark L1. In the case of approaching the landmark L1, the playback sound of the music data set for the landmark L1 is output in a state where the sound source is localized in the direction of the landmark L1.

As illustrated in Fig. 26, playback control for performing reverb processing on the vocal of the main track as approaching the landmark L1 is performed as playback control based on passage of the landmark. In the case of passing through the vicinity of the landmark L1 a plurality of times, playback control such as changing the type of the additional track to be added to the main track is performed between the first passing and the second passing.

### • Specific example 5 of playback control

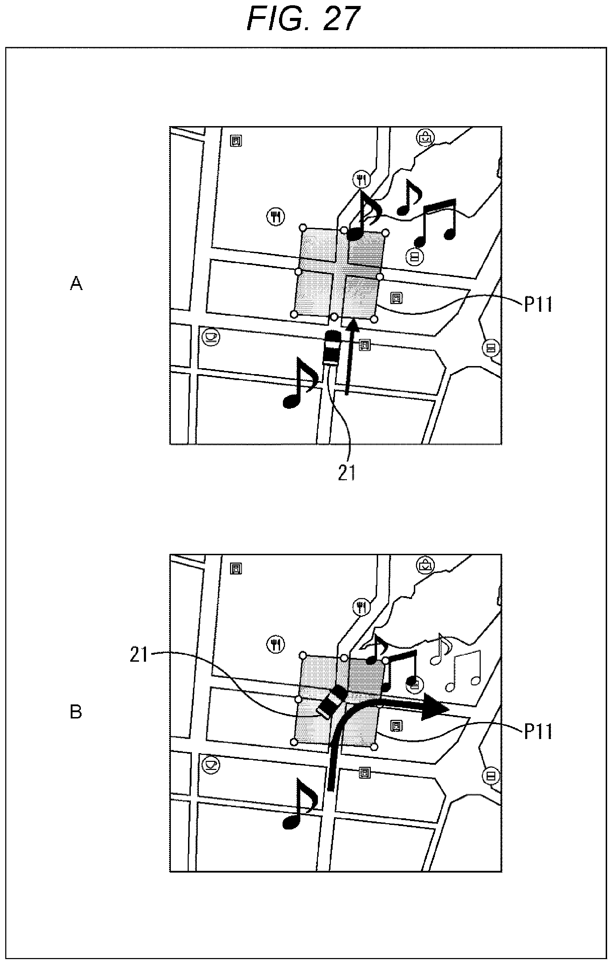

Fig. 27 is a diagram illustrating an example of playback control in the case of traveling at a specific point indicated by POI information.

A of Fig. 27 illustrates playback control in a case where the vehicle enters a specific intersection P11 indicated by the POI information and then goes straight. B of Fig. 27 illustrates playback control in a case where the vehicle enters the intersection P11 and then turns right (left turn).

As described above, different playback control is performed in the case of going straight and the case of turning right or left, so that different playback sounds are output into the vehicle.

### • Specific example 6 of playback control

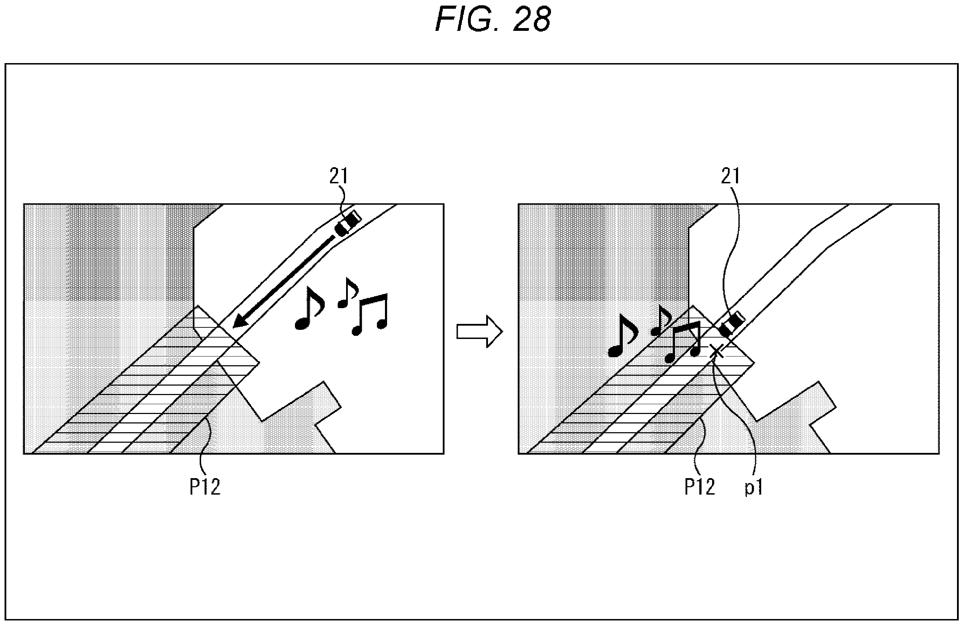

Fig. 28 is a diagram illustrating another example of the playback control in the case of traveling at a specific point indicated by the POI information.

Among the specific points, for example, a point such as a tunnel is a point at which the position information by the GPS sensor is likely to be interrupted. Here, consider a case where data by the GPS sensor is interrupted at a point p1 that is a start point of a point P12 in Fig. 28. A hatched point P12 indicates a range in the tunnel.

In this case, in a case where the trigger information using the position information on the vehicle 21 is set at the time of setting the music generation parameter, when the position information by the GPS sensor is interrupted, sound skipping or the like may occur, and a problem may occur in the playback control of the music data and the output of the playback sound of the music data for which the playback control has been performed.

Therefore, as illustrated on the right side of Fig. 28, before entering the point P12, a time from the current traveling position to the entry to the point P12 is measured in advance on the basis of the position information acquired by the position information acquisition unit 311 and the vehicle body information acquired by the vehicle body information acquisition unit 312. Since the synchronous playback is performed according to the time until the vehicle enters the point P12, even in a case where the position information by the GPS sensor is interrupted at the point p1, the playback sound synchronously played back can be output into the vehicle without generating sound skipping or the like.

Such processing is performed so that discomfort can be prevented from being given to the user.

### • Specific example 7 of playback control

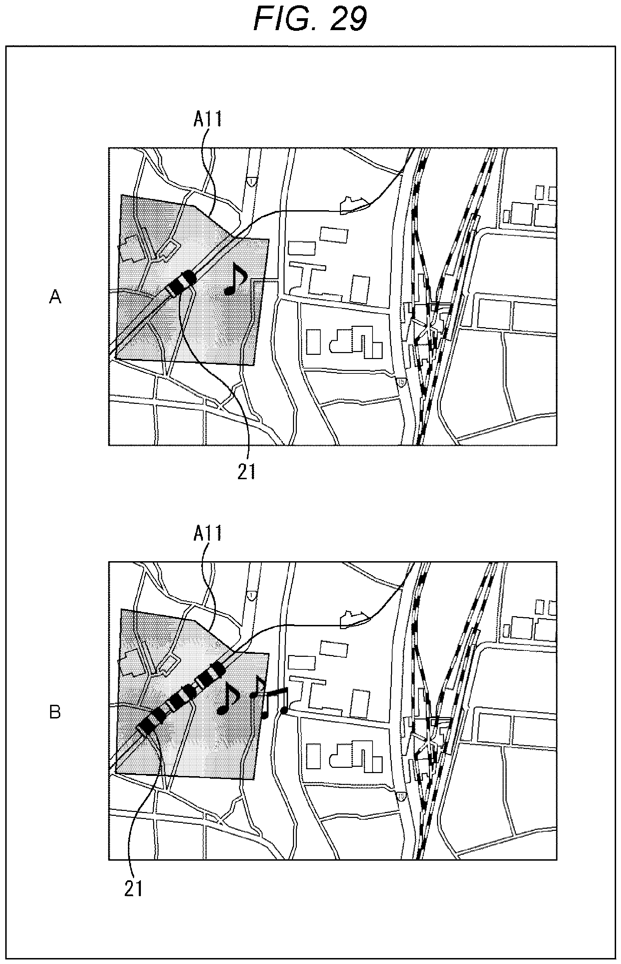

Fig. 29 is a diagram illustrating an example of the playback control based on the traffic condition of the area where the vehicle is traveling.

Fig. 29 illustrates a traffic condition during traveling in the area A11. A of Fig. 29 illustrates a situation in which no traffic congestion occurs in the area A11, and B of Fig. 29 illustrates a situation in which traffic congestion occurs in the area A11.

The traffic congestion is a situation where the user is likely to feel stress, and even in a situation where the traffic congestion occurs, there is a possibility that the user feels bored by only outputting the music data based on the playback control similar to the normal time.

Therefore, the content of the playback control of the music data is dynamically changed according to the traffic situation of the traveling area, so that a music experience can be provided which reduces stress of the user and is less likely to be bored.

Furthermore, for example, information on an area where traffic congestion has occurred may be acquired in advance from the traffic information server 212 or the like, and playback control such as outputting an alert sound may be performed in a case where a distance to the area where traffic congestion has occurred is within a predetermined distance. As a result, the user can grasp in advance that he/she will encounter a traffic congestion, and can consider a detour.

In addition to the traffic condition, for example, the content of the playback control of the music data may be dynamically changed according to a road condition or a weather (a well-maintained road and a bad road, a road surface condition on a sunny day and a road surface condition on a rainy or snowy day, and the like). When the road situation is detected, various types of information associated with the road situation (dry, moisture, wet, ice and snow, gravel, coefficient of friction, etc. of a road surface) may be acquired by the user terminal 22 or the sensor of the vehicle 21.

### • Specific Example 8 of playback control

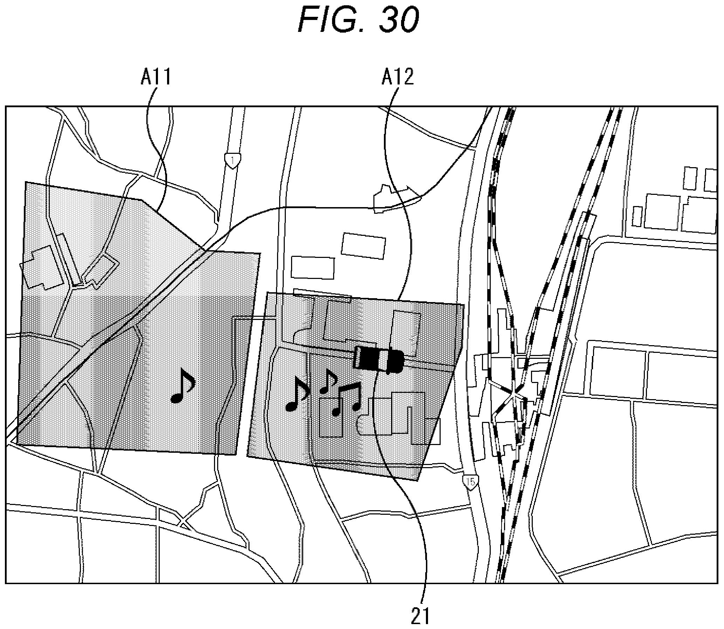

Fig. 30 is a diagram illustrating an example of playback control based on information such as speed information on a traveling area.

An area A11 illustrated in Fig. 30 is the same as the area A11 in Fig. 29. For example, it is assumed that a speed limit is different between the area A11 and an area A12 which is an adjacent area thereto in Fig. 30.

Here, the area A11 is an area including an ordinary road with a speed limit of 40 km/h. The area A12 is an area including an expressway with a speed limit of 80 km/h. Consider a case where a music generation parameter indicating the content of the playback control of "in a case where the speed of the vehicle 21 reaches 40 km/h, an alert sound is added to the main track and played back" is set in both the area A11 and the area A12.

In this case, since the speed limit in the area A11 is 40 km/h, there is a low possibility that the speed of the vehicle 21 driven by the user exceeds 40 km if the vehicle is traveling in the area A11, and it can be said that the music generation parameter indicating the content of the playback control of "in a case where the speed of the vehicle 21 reaches 40 km/h, an alert sound is added to the main track and played back" described above is appropriate.

On the other hand, in a case where the area is switched from the area A11 to the area A12, since the speed limit of the area A12 is 80 km/h, it is highly likely that the vehicle travels at a speed higher than 40 km/h during normal traveling. Therefore, if the music generation parameter indicating the content of the playback control of above-described "in a case where the speed of the vehicle 21 reaches 40 km/h, an alert sound is added to the main track and played back" remains, the alert sound is continuously output to the user.

In the above-described example, there is a possibility of causing the user's inattentiveness, which is not preferable also from the viewpoint of safe driving. Therefore, the content of the playback control of the music data is dynamically changed according to the speed information on the traveling area, so that the user's inattentiveness can be prevented which is caused by performing the unnatural playback control. For example, the music generation parameter is changed to a music generation parameter indicating the content of the playback control of "in a case where the speed of the vehicle 21 reaches 80 km/h, an alert sound is added to the main track and played back", and the playback control in the area A12 is performed on the basis of the changed music generation parameter.

A specific example of the playback control of the music data in the music data playback system 13 has been described above with reference to Figs. 24 to 30. Note that a specific example of the playback control of the music data is not limited to the case of Figs. 24 to 30.

### • Operation of music data playback system

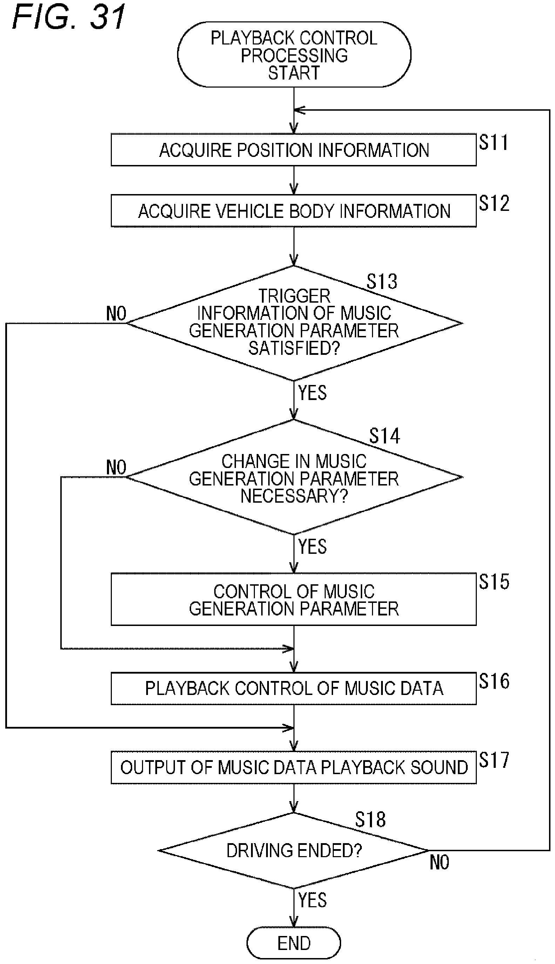

Fig. 31 is a flowchart when playback control of music data is performed in the music data playback system 13 that is a configuration on the user side.

For example, after the music generation parameter sent from the information processing server 12 is acquired by the music control unit 301, the processing of each step is started. A plurality of music generation parameters created by various creators is obtained. The acquisition of the music generation parameter is performed by the communication unit 79 of the user terminal 22, but may be acquired by a communication unit mounted on the vehicle 21 driven by the user instead.

As described above, the trigger information and the music information are set in association with each other in the music generation parameter. The trigger information is information defining a condition serving as a trigger when the playback control of the music data is executed, and is indicated by A of Fig. 2, for example. The music information includes information such as music parameter information 511A indicating what kind of playback control is performed on the music data. Here, the music parameter information 511A is information associated with an algorithm indicating what kind of playback control is to be performed on the music data associated with each area.

Therefore, in order to perform appropriate music data playback control in the music data playback system 13, it is necessary to determine whether or not the condition defined by the trigger information is satisfied. This determination is performed by each unit of the music control unit 301 (Fig. 8).

In step S11, the position information acquisition unit 311 of the music control unit 301 acquires the position information on the vehicle 21 driven by the user on the basis of various sensor data supplied from the sensor 74.

In step S12, the vehicle body information acquisition unit 312 acquires the vehicle body information on the vehicle 21 on the basis of various sensor data supplied from the sensor 74.

Through steps S11 and S12, the above-described event acquisition is performed. That is, the position information acquisition unit 311 and the vehicle body information acquisition unit 312 function as an event acquisition unit that acquires an event occurring on the user side.

In step S13, the music generation parameter control unit 313 determines whether or not the trigger information set with the music generation parameter acquired before the start of the processing is satisfied on the basis of the position information on the vehicle 21 acquired by the position information acquisition unit 311 and the vehicle body information on the vehicle 21 acquired by the vehicle body information acquisition unit 312. That is, it is determined whether or not the acquired event satisfies the trigger information.

In a case where it is determined in step S13 that the acquired event satisfies the trigger information set in the music generation parameter acquired before the start of the processing, the processing proceeds to step S14.

In step S14, the music generation parameter control unit 313 determines whether or not it is necessary to change the music generation parameter acquired before the start of the processing on the basis of the acquired event and trigger information.

In step S14, in a case where it is determined that the music generation parameter acquired before the start of the processing needs to be changed, the processing proceeds to step S15. Note that, in a case where the music generation parameter is changed in the music data playback system 13, it may be set in advance such that the music generation parameter is changed in the music data playback system 13 when the music generation parameter is set on the creator side.

In step S15, the music generation parameter control unit 313 changes (controls) the music generation parameter acquired before starting the processing. Here, as an example in which the music generation parameter acquired before the start of the processing is changed, for example, the example described with reference to Fig. 30 can be cited.

Next, in step S16, the music playback control unit 314 performs playback control of the music data on the basis of the music generation parameter changed in step S15.

On the other hand, in a case where it is determined in step S14 that it is not necessary to change the music generation parameter, the processing of step S15 is skipped, and then the playback control of the music data is performed in step S16.

In this case, the music generation parameter acquired before the start of the processing in step S15 is not changed.

Therefore, in step S16, the playback control based on the music generation parameter acquired before the start of the processing is performed on the music data.

Subsequently, in step S17, the output unit 401 outputs the playback sound of the playback-controlled music data to a space inside the vehicle. In a case where it is determined in step S13 that the trigger information set in the music generation parameter is not satisfied, the processing proceeds to step S17, and the output of the playback sound is continued.

Thereafter, in step S18, the music control unit 301 determines whether or not the user has finished driving. Whether or not the driving has been finished may be determined by turning on/off the engine, for example. In a case where it is determined in step S18 that the driving has not been finished, the processing in and after step S11 is started again. In a case where it is determined in step S18 that the driving has been finished, the processing ends.

Here, the example in which the processing is ended by the end of the driving has been described, but the start and end of the processing may be performed on the basis of the voice of the user recognized by the microphone 73 included in the user terminal 22.

For example, there is a case where a wake word such as "play music because of being slightly drowsy" or "stop playback of music because of a desire to concentrate on driving" is recognized by the microphone 73 included in the user terminal 22 or the voice recognition system of the vehicle 21.

In addition, for example, it is conceivable to acquire biological data such as a sweating state, a heartbeat, and brain waves of the driver and the passenger by a biological sensor provided in a seat of the vehicle 21, estimate the sleepiness level, the tension level, and the like of the driver on the basis of the biological data, and use the estimated data for controlling the music generation parameter.

For example, the music generation parameter can be changed so as to perform playback control such as additional playback of music data for encouraging awakening and a sound for encouraging a rest as an additional track for a driver with increasing sleepiness level.

In addition, it is conceivable that an elderly person or a driver who has just acquired a driver's license tends to have a feeling of being not good at driving, and high tension is forced during driving. Therefore, the music generation parameter may be changed so as to perform playback control in which a voice that encourages driving is added as an additional track according to the degree of tension of the user. As described above, the present technology can also be applied to accessibility.

### <Playback control using sound source separation>

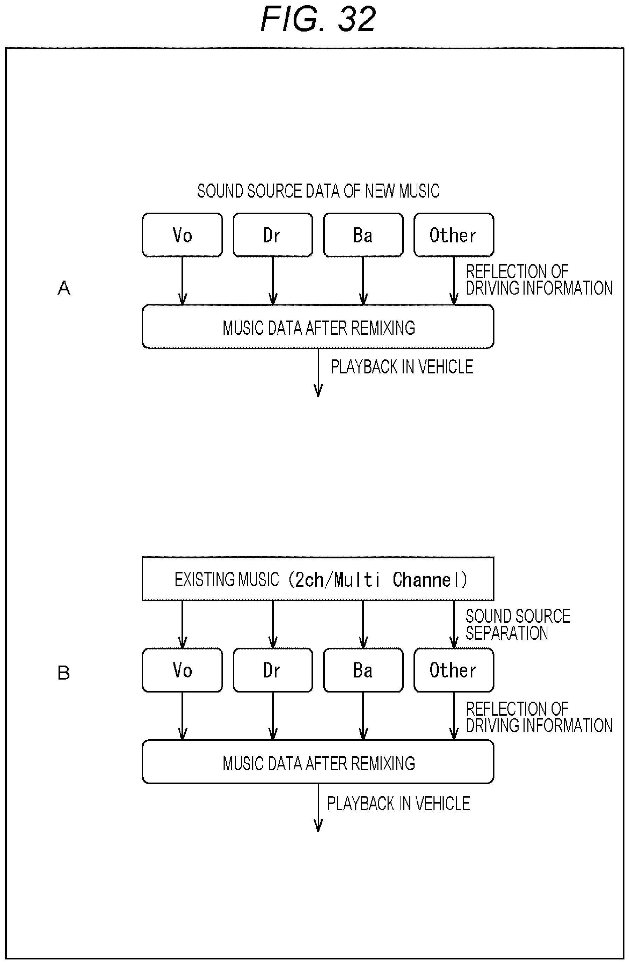

Fig. 32 is a diagram illustrating an example of tracks to be subjected to playback control.

In the above description, the playback control on the track set using the existing music and the track (sound source data) newly created by the creator and uploaded to the information processing server 12 as illustrated in A of Fig. 32 has been described. However, as illustrated in B of Fig. 32, a track obtained by performing the sound source separation on the existing music may be used as a target of the playback control.

In the example in B of Fig. 32, sound source separation is performed on existing music, and tracks of four types of sound sources of Vocal (Vo), Drum (Dr), Bass (Ba), and Other are acquired. Furthermore, remixing (reconfiguration) reflecting the driving information is performed on tracks of four types of sound sources on the basis of trigger information or the like defined by the music generation parameter, and the music data after the remixing is used for playback in the vehicle.

In this way, each track acquired by sound source separation for the existing music is used for the playback control, so that the creator does not need to newly create and prepare a track to be subjected to the playback control by the music generation parameter. In addition, since music or the like delivered by a streaming service provided by a predetermined business can be used as a target of playback control, in a case where playback control using a music generation parameter is provided as a service for a vehicle interior, the service can be expanded.

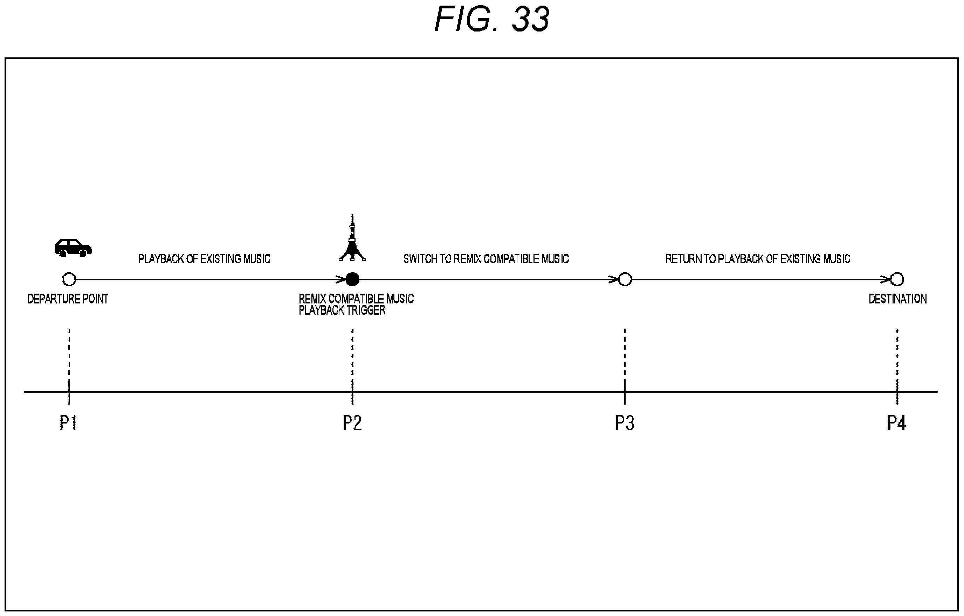

Fig. 33 is a diagram illustrating an example of playback control for a track generated by sound source separation.

In the example of Fig. 33, traveling is started with a position P1, which is a position in a certain area, as a departure point. The above-described playback control according to the vehicle body information or the like is performed on the existing music set for the traveling area between the position P1 and a position P2. For example, playback control for the existing music delivered by the streaming service is performed up to the position P2.

In this example, when a landmark such as Tokyo Tower approaches the certain position P2, switching the music to be played back and controlled to remix compatible music is set by trigger information or the like. In response to the traveling position approaching the position P2, the remix compatible music is acquired by the user terminal 22, and sound source separation is performed.

The remix compatible music is associated with, for example, separation information including information indicating that it is content (music) in which sound source separation is possible. In the user terminal 22, music capable of sound source separation is acquired on the basis of the separation information, and sound source separation is performed.

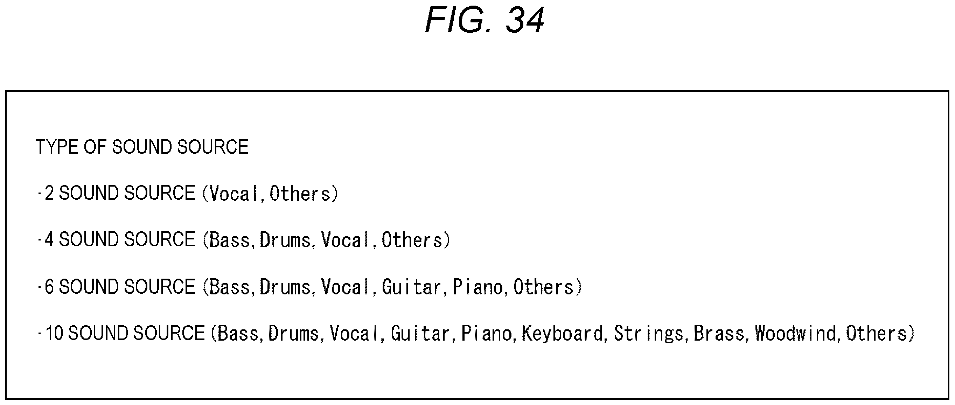

Fig. 34 is a diagram illustrating types of sound sources.

For example, as illustrated in Fig. 34, four types of sound source separation of two sound sources, four sound sources, six sound sources, and ten sound sources is possible. For example, in a case where source separation of two sound sources is performed, and in a case where tracks of Vocal and Others are obtained, and source separation of four sound sources is performed, tracks of Bass, Drums, Vocal, and Others are obtained. Information indicating the type of the separable sound source may be included in the separation information.

In the example of Fig. 33, the playback control reflecting the driving information is performed up to the position P3 for each track acquired by the sound source separation. For example, in a case where sound source separation of two sound sources is performed in the user terminal 22 and the tracks of Vocal and Others are acquired, a music effect suitable for the track of Vocal is given by playback control. In this way, the content of the playback control is switched depending on the type of track acquired by the sound source separation.

Contents of a music effect such as an effect may be set for each track. For example, for the track of Vocal, processing such as applying a reverb is performed while traveling in the tunnel.

As another track added to the main track acquired by the sound source separation, a track acquired from the same music as the main track may be used, or a track acquired from another music may be used. For example, a track of music having similar parameters such as BPM and a key is used for addition to the main track.

### • Configuration of music control unit

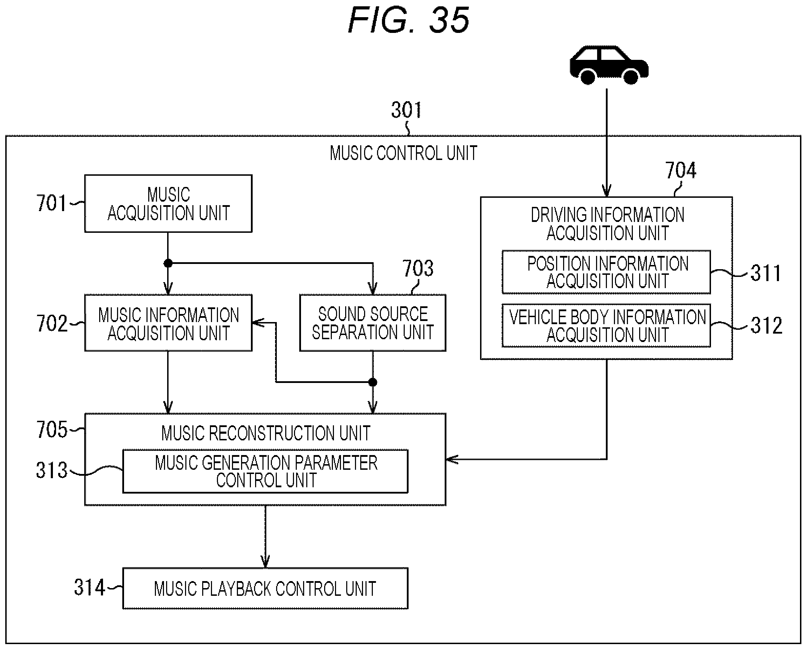

Fig. 35 is a block diagram illustrating a configuration example of the music control unit 301 including a configuration for performing sound source separation as described above. In the configuration illustrated in Fig. 35, the same components as those described with reference to Fig. 8 and the like are denoted by the same reference numerals. Redundant description will be omitted as appropriate.

The music control unit 301 illustrated in Fig. 35 includes a music acquisition unit 701, a music information acquisition unit 702, a sound source separation unit 703, a driving information acquisition unit 704, and a music reconstruction unit 705 in addition to the position information acquisition unit 311, the vehicle body information acquisition unit 312, the music generation parameter control unit 313, and the music playback control unit 314 described above. The position information acquisition unit 311 and the vehicle body information acquisition unit 312 are provided as a functional unit configuring the driving information acquisition unit 704, and the music generation parameter control unit 313 is provided as a functional unit configuring the music reconstruction unit 705.

The music acquisition unit 701 acquires music data that is data of music to be subjected to sound source separation. The music data may be acquired from a server on a cloud such as a server that provides a streaming service or the information processing server 12, or may be acquired from the user terminal 22.

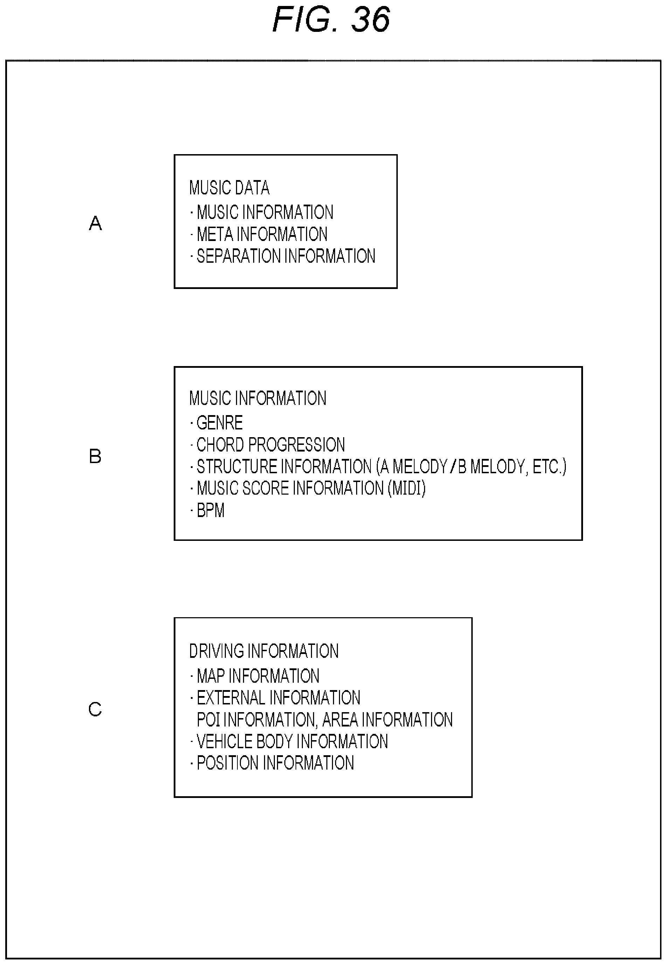

As illustrated in A of Fig. 36, music information, meta information, and separation information are associated with the music data acquired by the music acquisition unit 701. Not all three types of information may be associated with each piece of music data, but at least one of the three types of information may be associated with each piece of music data.

The music information is information indicating attributes of music such as a key, a beat, and a BPM. The music metadata information 511B described above corresponds to the music information.

The meta information includes information indicating a portion (section) used for remixing, information indicating a remixing method, and the like. At least one of the pieces of information configuring the above-described music parameter information 511A may be included in the meta information.

The separation information includes information indicating the type of the sound source as described with reference to Fig. 34, information indicating whether or not the music can be subjected to the sound source separation, and information indicating whether or not the sound source separation has been performed. Not all three types of information may be included, but at least one of the three types of information may be included in the separation information. Furthermore, in addition to the above-described information, information such as waveform data and musical score data of a sound source may be included.

For example, separation information including information indicating that sound source separation has been performed is associated with music data for which sound source separation has been performed in the user terminal 22 or the information processing server 12 used by a certain user. In a case where data of each track acquired by the sound source separation is stored in a server or the like that has performed the sound source separation, information indicating a storage location of the data of each track may be included in the separation information.

In a case where the information indicating that the sound source separation has been performed is included in the separation information, the sound source separation is not performed in the user terminal 22, and the data of each track is acquired on the basis of the information indicating the storage location. Furthermore, playback control is performed on the acquired data of each track. Therefore, it is not necessary to perform the sound source separation each time, and the processing load of the user terminal 22 can be reduced.

As described above, the sound source separation of the existing music can be performed not as the real-time processing after the start of the music playback but as the pre-processing before the start of the music playback. In the case that the sound source separation of the existing music is performed as the preprocessing, for example, the sound source separation is performed before the playback of each music is started with reference to the playlist selected by the user. The playlist includes information indicating the playback order of each piece of music, etc.

Furthermore, the sound source separation of the existing music can be performed not in the user terminal 22 as processing on an edge terminal side but in the information processing server 12 as processing on the cloud side. In a case where the sound source separation is performed as processing on the cloud side, music to be subjected to the sound source separation is uploaded to the information processing server 12 through the Internet, and the sound source separation is performed.

The music data acquired by the music acquisition unit 701 is supplied to the music information acquisition unit 702 and the sound source separation unit 703.

The music information acquisition unit 702 acquires music information by analyzing the music data supplied from the music acquisition unit 701 or by referring to music information or the like associated with the music data. As illustrated in B of Fig. 36, the music information includes, for example, information indicating a genre of music, chord progression, structure information such as A melody/B melody, musical score information such as MIDI data, BPM, and the like, but other information may be included.

The acquisition of the music information by the music information acquisition unit 702 is appropriately performed by analyzing the data of the track supplied from the sound source separation unit 703. For example, information on a melody is acquired as music information by analyzing a track of Vocal. The music information acquired by the music information acquisition unit 702 is supplied to the music reconstruction unit 705.

The sound source separation unit 703 performs sound source separation on the music data supplied from the music acquisition unit 701, and acquires data of a predetermined number of tracks such as two sound sources, four sound sources, six sound sources, and ten sound sources. The number of sound sources separated by the sound source separation unit 703 may be automatically set by the music control unit 301, for example, or may be appropriately set by the user.

The sound source separation by the sound source separation unit 703 may be performed by analyzing a signal, or may be performed using an inference model generated by machine learning. In the latter case, an inference model having music data as an input and data of a track of each sound source as an output is prepared in the sound source separation unit 703. The data of the track of each sound source acquired by the sound source separation unit 703 is supplied to the music information acquisition unit 702 and the music reconstruction unit 705.

In a case where the track data of each sound source configuring the existing music is prepared in advance, the inference model used for sound source separation may be relearned, and the performance of the sound source separation may be improved.

The driving information acquisition unit 704 includes a position information acquisition unit 311 and a vehicle body information acquisition unit 312. The position information acquisition unit 311 of the driving information acquisition unit 704 acquires the position information on the vehicle 21 driven by the user on the basis of data supplied from a positioning sensor or the like built in the user terminal 22 as the sensor 74.

The vehicle body information acquisition unit 312 of the driving information acquisition unit 704 acquires the vehicle body information on the vehicle 21 driven by the user on the basis of the sensor data supplied from the sensor 74. As described above, the vehicle body information is information indicating a traveling state of the vehicle 21 such as start/stop, acceleration/deceleration, right/left turning, turning the steering wheel at a curve, and the like.

The position information acquired by the position information acquisition unit 311 and the vehicle body information acquired by the vehicle body information acquisition unit 312 are supplied to the music reconstruction unit 705 as driving information together with other information as illustrated in C of Fig. 36. In the example in C of Fig. 36, in addition to the vehicle body information and the position information, map information and external information are indicated as information configuring driving information. The external information is information including POI information and area information included in the trigger information 512.

The music generation parameter control unit 313 of the music reconstruction unit 705 performs playback control reflecting the position information and the vehicle body information included in the driving information supplied from the driving information acquisition unit 704 on the basis of the music generation parameter, thereby remixing the music including an arbitrary track separated by the sound source separation unit 703. The music generation parameter indicating the music after remixing by the music reconstruction unit 705 is supplied to the music playback control unit 314 together with the data of each track.

The music playback control unit 314 plays back each track on the basis of the music generation parameter indicating the remixed music supplied from the music reconstruction unit 705. The playback sound based on the music generation parameter is output from a speaker configuring the output unit 401 (Fig. 8) such as the speaker 77 built in the user terminal 22.

As will be described later, at least a part of the configuration illustrated in Fig. 35 can be provided in the information processing server 12 which is a server on a cloud.

### • Specific example of remix

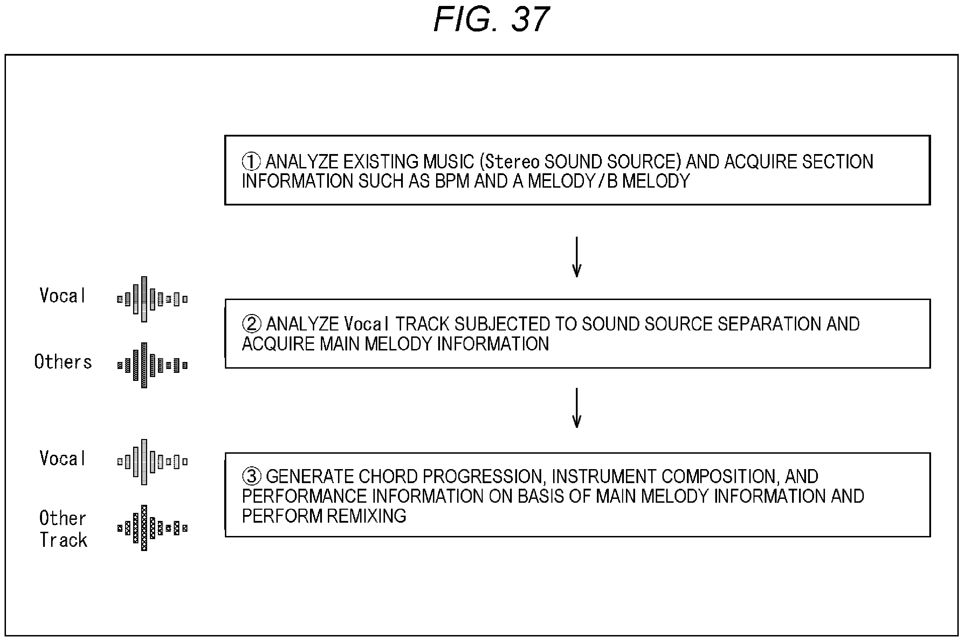

Fig. 37 is a diagram illustrating a specific example of remixing existing music.

In the example of Fig. 37, the existing music of a stereo sound source is acquired as a sound source separation target. In this case, as illustrated in an upper part of Fig. 37, the existing music to be subjected to the sound source separation is analyzed by the music information acquisition unit 702, and the section information such as BPM and A melody/B melody is acquired. Furthermore, sound source separation is performed by the sound source separation unit 703, and the Vocal track and the Others track are acquired.

As illustrated in a middle part of Fig. 37, the Vocal track acquired by the sound source separation is analyzed by the music information acquisition unit 702, and the main melody information (main melody) is acquired.

As illustrated in a lower part of Fig. 37, for example, a music generation parameter indicating contents of chord progression, instrument composition, and performance information is generated by the music reconstruction unit 705 (music generation parameter control unit 313) on the basis of main melody information on the Vocal track, and remixing is performed using the music generation parameter. The performance information is information indicating how to play each instrument, tone, and the like. For example, a music generation parameter indicating chord progression matching main melody information on the Vocal track is generated.

Driving information is also appropriately used to generate the music generation parameter. For example, as illustrated in a lower part of Fig. 37, music including the Vocal track and the Other track is generated as remixed music. The Other track is, for example, a track used for a process of harmonizing the Vocal track. In the harmonizing process, the entire music may be remixed, or partial remixing such as a chorus portion may be performed. The Other track may be prepared in advance by the creator, or may be automatically generated on the basis of information acquired from the system (information processing server 12).

In this way, sound source separation is performed, and the music generation parameter is generated on the basis of the melody information on an important track (for example, a Vocal track is appropriate. In the case of music without Vocal, a main musical instrument of the music is appropriate.) of the existing music, thereby enabling remixing such as to add an arrangement while leaving the atmosphere of the existing music.

### • Joining of existing music

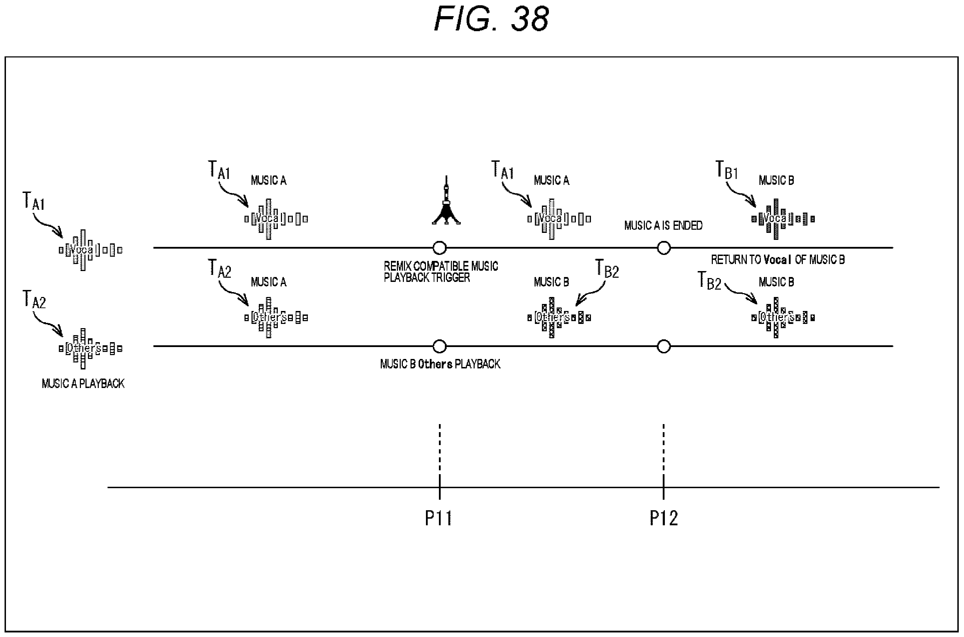

Fig. 38 is a diagram illustrating an example of connection processing of existing music.

Here, processing in a case where the music to be played back is switched from the music A to the music B will be described. It is assumed that the music to be played back next to the music A is set as the music B on the basis of a playlist, a music list, or the like prepared in advance. The playback order of the music may be recommended using local data of the user terminal 22 or a DB on a cloud. The music recommendation is performed on the basis of a key, a BPM, an artist name, a genre, and the like.

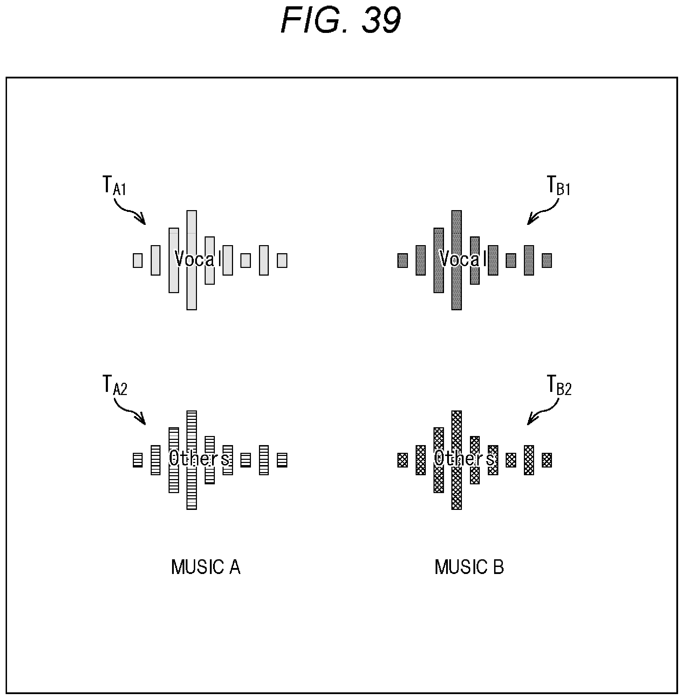

The music A and the music B are existing music including a Vocal track and the Other track as illustrated in Fig. 39. A Vocal track T_{A1} and the Other track T_{A2} are acquired by the sound source separation for the music A, and a Vocal track T_{B1} and the Other track T_{B2} are acquired by the sound source separation for the music B.

In the example of Fig. 38, while traveling in a certain area, the music A set to the traveling area is played back. During the playback of the music A, playback control according to the vehicle body information or the like is appropriately performed on the Vocal track T_{A1} and the Other track T_{A2}.

It is assumed that the trigger information or the like sets that the music to be subjected to playback control is switched to the remix compatible music when the landmark approaches the position P11. In the example of Fig. 38, as the traveling position approaches the position P11, the playback of the Vocal track T_{A1} of the music A is continued as it is, and the playback of the Other track T_{B2} of the music B is started instead of the Other track T_{A2} of the music A. Until the position P12, playback control is performed on the Vocal track T_{A1} of the music A and the Other track T_{B2} of the music B.

In the case where the traveling position approaches the position P12 and the playback of the music A ends, the Vocal track T_{B1} of the music B is used as a playback control target together with the Other track T_{B2} of the music B instead of the Vocal track T_{A1} of the music A.

In this manner, after the playback control for a part of the track of the music to be played back first and a part of the track of the music to be played back next is performed, switching to the next music may be performed.

Information indicating a section in which playback control for tracks of different pieces of music is performed may be included as meta information (B of Fig. 36) as information on a place suitable for connection. For example, information on a start position and an end position of each section such as intro, A melody, and B melody is set in the meta information as information on a place suitable for connection. Information on a place suitable for connection is set by, for example, a creator or by analyzing music.

In this manner, at the time of connecting the pieces of music, remixing is performed so as not to cause discomfort due to the connection.

For example, there are many cases where a track of a sound source such as Drum is added to any portion of other music relatively without a sense of discomfort, but there are many cases where it is necessary to limit the portion to be added for a track in which a melody such as Vocal is clear. In this manner, predetermined restrictions may be set for tracks with restrictions on playback locations and remixing methods, and optimization at the time of connection may be performed.

In a case where the BPM of a certain music is different from the BPM of the next music to be played back, the remix may be performed after signal processing such as time stretch is performed. In addition, not all the components of the specific sound source acquired by the sound source separation may be used for the remix, but only some components such as timbre may be used for the remix.

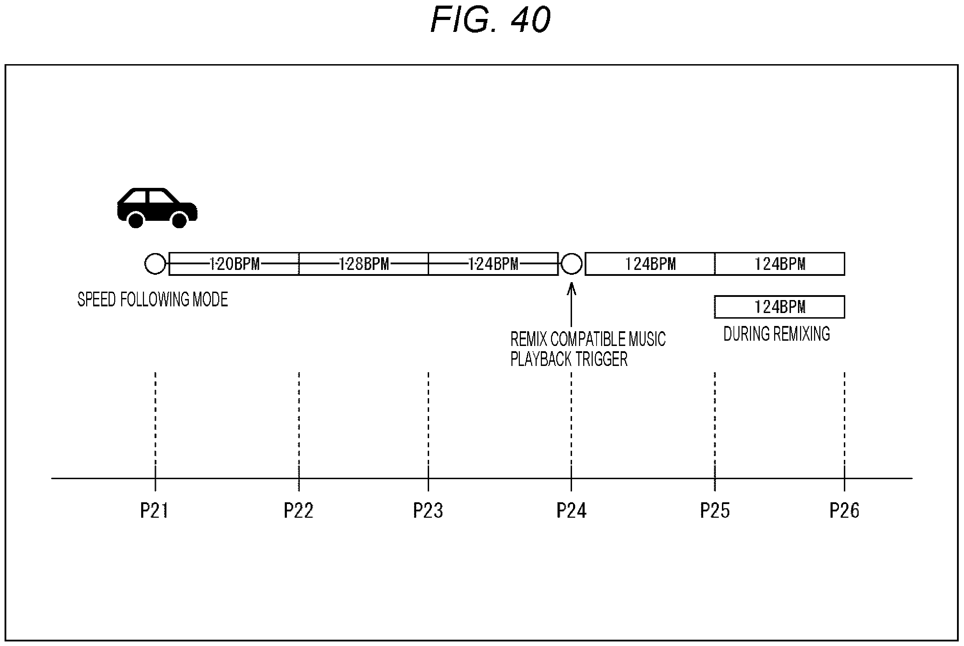

Fig. 40 is a diagram illustrating another example of the existing music connection processing.

Here, connection processing at the time of playback control in a speed following mode will be described. The speed following mode is a mode in which music of BPM corresponding to a traveling speed is to be played back.

In the example of Fig. 40, during traveling in a section from a position P21 to a position P22, playback control according to vehicle body information or the like is performed on music of 120 BPM set for the traveling area. A section in units of sections configuring one piece of music may be used as a playback target instead of the entire one piece of music.

Similarly, music of 128 BPM is used as a target of playback control in a section from the position P22 to a position P23, and music of 124 BPM is used as a target of playback control in a section from the position P23 to a position P24.

It is assumed that switching the music to be subjected to the playback control to the remix compatible music when approaching the position P24 is set by the trigger information or the like. In the example of Fig. 40, in response to the traveling position approaching the position P24, it is maintained that the music of 124 BPM is set as the target of the playback control. Also, in a section from the position P24 to a position P25, music of 124 BPM is used as a target of playback control similarly to the previous section.

When the traveling position approaches the position P25, the target of the playback control is switched to the track of the specific sound source of the music of 124 BPM acquired by the sound source separation. In the example of Fig. 40, music is remixed by adding tracks of sound sources of other music of the same BPM (124BPM). As described above, at the time of remixing, for example, in a case where the traveling speed is faster than a threshold speed, the track of the music having the BPM higher than the threshold is selected, and in a case where the traveling speed is slower than the threshold speed, the track of the music having the BPM lower than the threshold is selected.

In this way, the music of the same BPM as the BPM of the music played back before the remix is selected as the remix target, so that the music can be connected in a natural form according to the traveling speed. When the BPM of the music greatly changes, the user feels uncomfortable, but such a situation can be prevented.

### • Production workflow

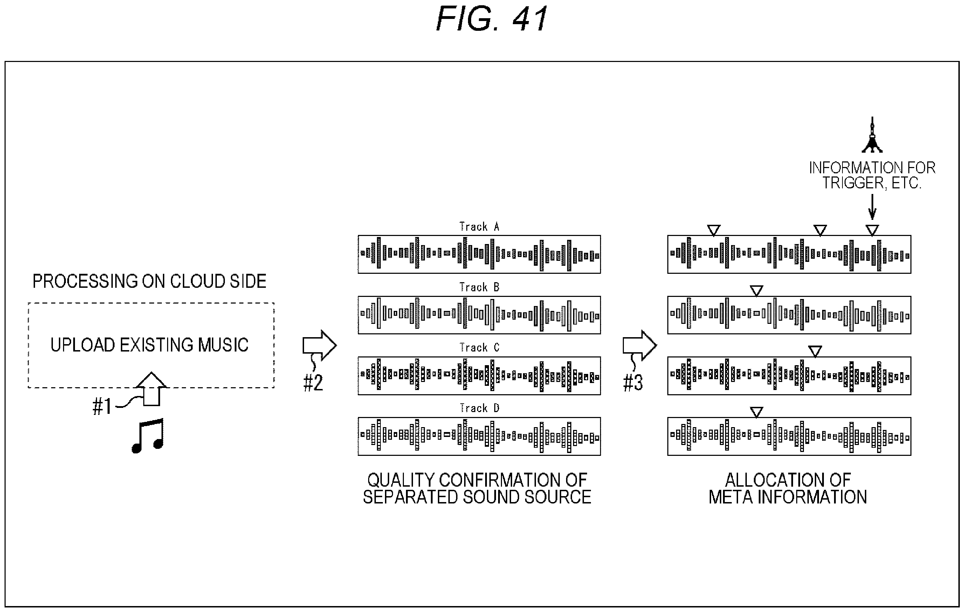

Fig. 41 is a diagram illustrating an example of a production workflow in a case where sound source separation is used.

In the example of Fig. 41, the sound source separation of the existing music is performed on the cloud side (the information processing server 12 side). In this case, the creator operates the creator terminal 11 to upload the existing music as indicated by an arrow #1.

In the information processing server 12 that has acquired the uploaded data of the existing music, the sound source separation is performed, and the tracks of the respective sound sources are acquired as indicated by a portion pointed by an arrow #2. The creator can confirm the quality by listening to each track.

After the quality is checked, the meta information or the like is set for each track as indicated by a portion pointed by an arrow #3. Downward triangles in Fig. 41 indicate setting position of the meta information. For example, trigger information defining a condition serving as a trigger when the playback control is executed is appropriately set as the meta information.

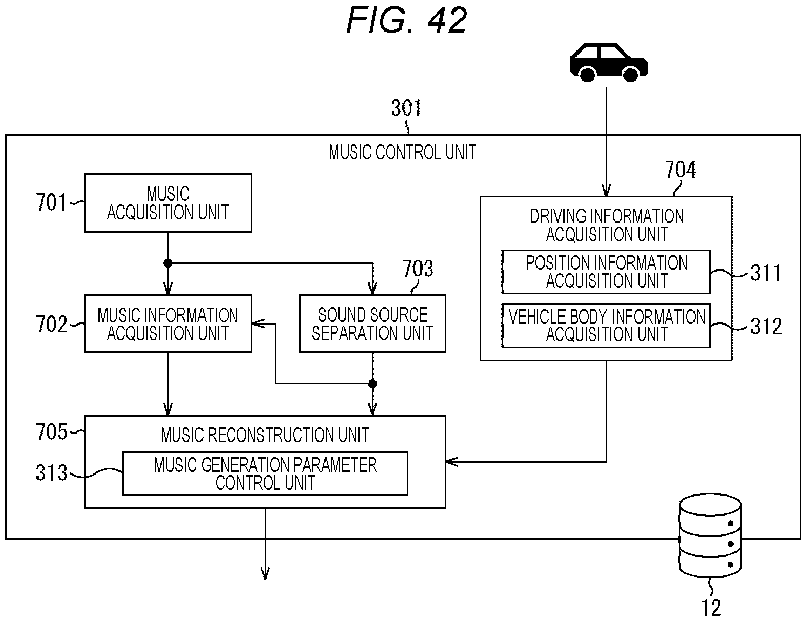

Fig. 42 is a diagram illustrating a configuration example of the information processing server 12 in a case where the sound source separation is performed on the cloud side.

In this case, as illustrated in Fig. 42, the music control unit 301 is realized in the information processing server 12. Not all the functional units of the music control unit 301 may be realized, but some of the functional units may be realized in the information processing server 12. In the configuration of the music control unit 301 illustrated in Fig. 42, the same components as those described with reference to Fig. 35 are denoted by the same reference numerals. Redundant description will be omitted as appropriate.

In the music control unit 301 illustrated in Fig. 42, the music data uploaded as the sound source separation target is acquired by the music acquisition unit 701 and output to the music information acquisition unit 702 and the sound source separation unit 703.

In the driving information acquisition unit 704, the vehicle body information is acquired on the basis of sensor data transmitted from the vehicle 21.

In the music playback control unit 314, playback control based on the music generation parameter supplied from the music reconstruction unit 705 is performed on the data of each track. Data of the playback sound is transmitted to the user terminal 22 and output from the speaker in the vehicle 21.

### <Playback control based on information acquired from captured image>

### • Playback control according to state of recognition object

The playback control may be performed by recognizing an object appearing in an image captured by the imaging unit 72 that is a camera of the user terminal 22 and changing the music generation parameter according to the position of the recognized object on the image. The music generation parameter dynamically changes so as to follow a change in the state of the object appearing in the image, such as the position on the image, whereby the music itself output to the user dynamically changes in real time. Note that the playback control may be performed by changing the music generation parameter using, for example, a depth map or thermography acquired from a depth sensor in addition to the image captured by the imaging unit 72 as a camera.

Such playback control can be performed using the track data of each sound source generated by the sound source separation described above.

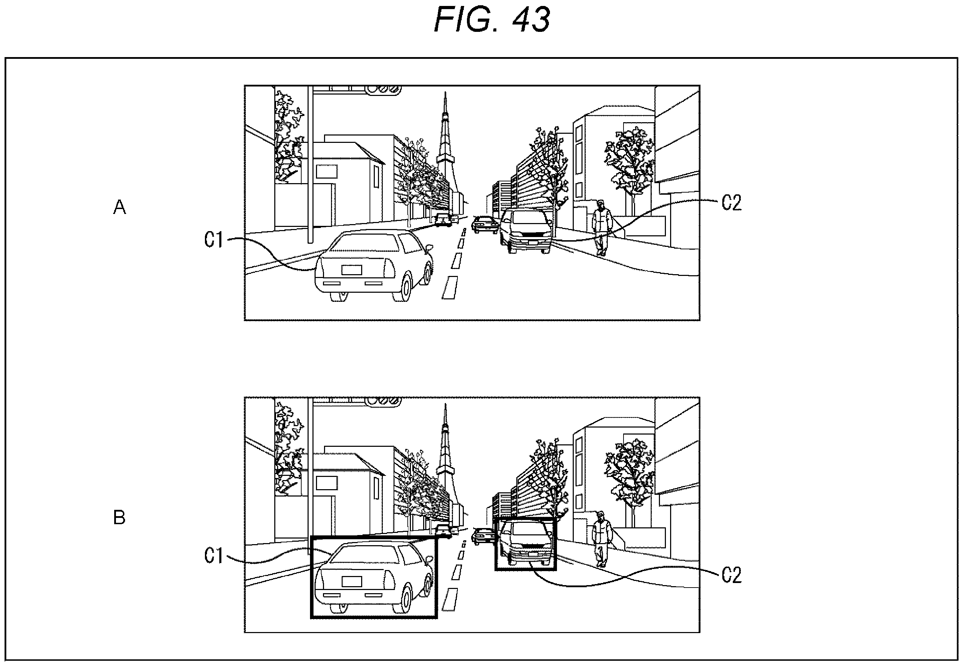

Fig. 43 is a diagram illustrating an example of object recognition.

For example, in a case where automobiles C1 and C2 are shown in an image captured during traveling as illustrated in A of Fig. 43, the automobiles C1 and C2 are recognized as surrounded by frames in B of Fig. 43. In the example of Fig. 43, the automobile C1 is shown at a position lower left than the center of the image, and the automobile C2 is shown at a position slightly right from the center. In the user terminal 22, a recognition model corresponding to the type of the object to be recognized is prepared.

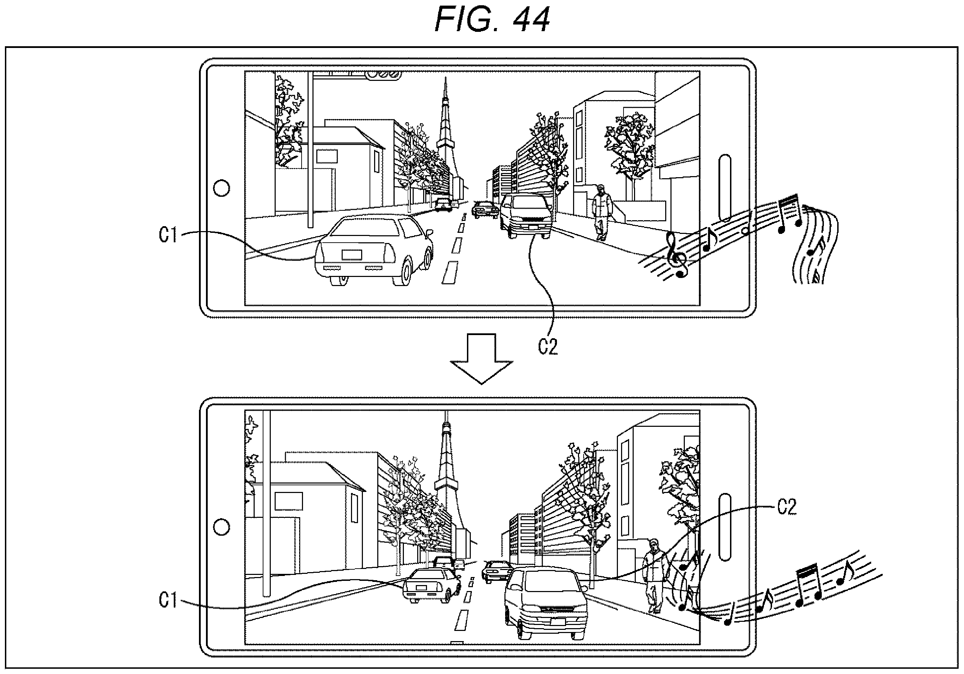

Fig. 44 is a diagram illustrating an example of music generation.

A state of the scenery illustrated in the upper part of Fig. 44 is the same as the state described with reference to Fig. 43. In the image displayed on the display 75 of the user terminal 22, the automobile C1 is shown at a position lower left than the center of the image, and the automobile C2 is shown at a position slightly right from the center.

In this case, a music generation parameter indicating a scale of a melody or the like is set on the basis of the positions of the automobile C1 and the automobile C2 recognized by the object recognition, and music based on the set music generation parameter is played back. For example, in a case where the automobile C1 and the automobile C2 are recognized during the playback of the music associated with the traveling area, the music generation parameter is set on the basis of the respective positions of the automobile C1 and the automobile C2, and the playback of the music is continued by adding a sound according to the set music generation parameter.

In a case where a predetermined time elapses and the positions of the automobile C1 and the automobile C2 change as illustrated in the lower part of Fig. 44, the music generation parameter is set (changed) on the basis of the changed positions of the automobile C1 and the automobile C2, and the music changed using the set music generation parameter is played back. The different arrangement of notes illustrated in the upper part and the lower part of Fig. 44 indicates that different pieces of music are being played.

As described above, the music changes according to the recognized position of the object, so that the user can drive while enjoying the change in the music. In addition, since the music generation parameter is set to reflect that the automobile driven by the user moves or the object moves, the user can enjoy the continuously changing music.

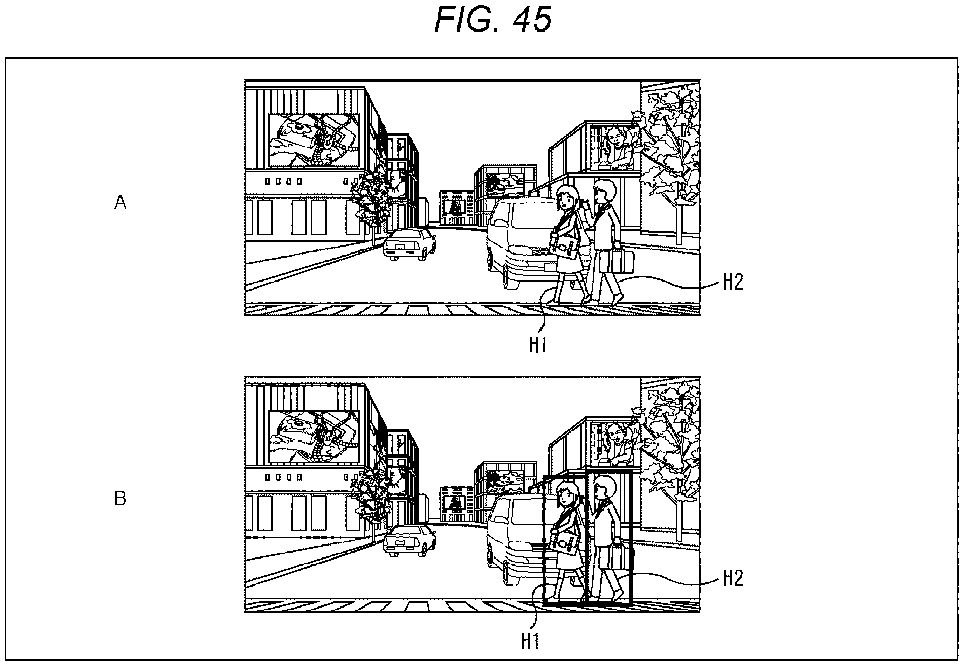

Fig. 45 is a diagram illustrating another example of the object recognition.

A landscape illustrated in Fig. 45 is a landscape imaged when an automobile driven by a user approaches an intersection. In a case where the vehicle approaches the intersection, a recognition model used for object recognition is switched to a model for person recognition. For example, in a case where a person H1 and a person H2 are shown in the captured image as illustrated in A of Fig. 45, the person H1 and the person H2 are recognized as surrounded by frames in B of Fig. 45. In the example of Fig. 45, the person H1 and the person H2 are shown at positions to the right of the center of the image.

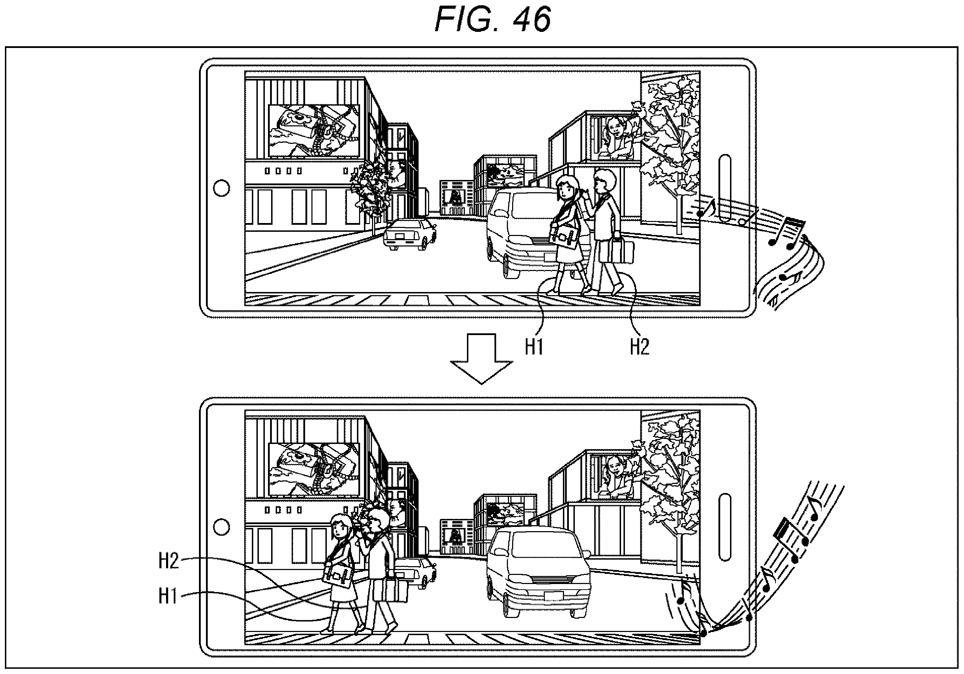

In this case, as illustrated in the upper part of Fig. 46, a music generation parameter is set on the basis of the respective positions of the person H1 and the person H2, and music based on the set music generation parameter is played back. In a case where a predetermined time elapses and the positions of the person H1 and the person H2 change as illustrated in the lower part of Fig. 46, the music generation parameter is set on the basis of the changed positions of the person H1 and the person H2, and the music changed using the set music generation parameter is played back.

Although an automobile is also shown in the image illustrated in Fig. 46, the automobile is not recognized, and the music generation parameter is set on the basis of the position of the person to be recognized. The automobile may be recognized together with the person, and the music generation parameter may be set on the basis of the positions of the person and the automobile.

As described above, in the user terminal 22, the type of the object to be reflected in the music generation parameter is switched according to the state of movement of the user such as the traveling state such as traveling/stopping, or the current position. For example, the type of the object to be reflected in the setting of the music generation parameter is switched such that an object that is easy for the user to visually recognize that the object is moving becomes a recognition target. An object that is easy for the user to visually recognize that the object is moving during traveling is an automobile, and an object that is easy for the user to visually recognize when the user is at an intersection is a person.

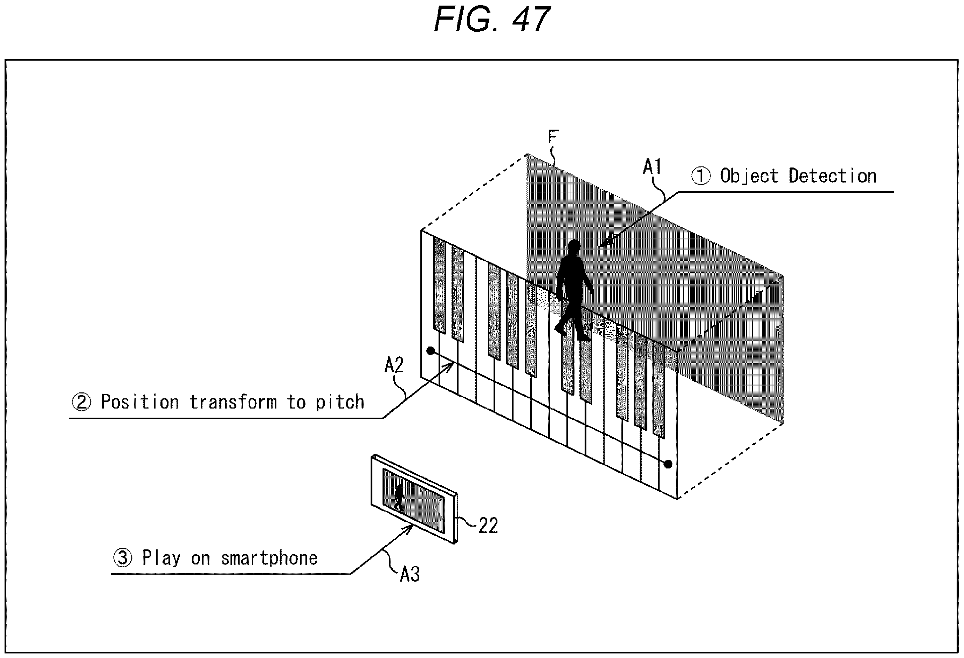

Fig. 47 is a diagram illustrating an image of music generation according to a position of an object.

In the image of music generation as described above, a keyboard is virtually arranged in front of a rectangle F indicating the imaging range of the user terminal 22, and the virtually arranged keyboard is pressed according to the position of the object. For example, in a case where an object is shown on the left side of the image, the music generation parameter is set such that a low melody sound is added to the main music. Furthermore, in a case where an object is shown on the right side of the image, the music generation parameter is set so that a high melody sound is added to the main music.

The type of the object to be recognized is switched and the music is changed according to the motion (change in position) of the object, so that the user can visually understand which object's motion the change of the music is linked to.

A music generation parameter may be associated with each type of object, and the music generation parameter associated with the recognized object may change according to the state of the object. For example, a rhythm music generation parameter is associated with an automobile as a recognition target, and a melody music generation parameter is associated with a person.

### • Playback control according to luminance of captured image

Playback control may be performed to change music on the basis of the luminance of an image displayed on the display 75. This function is used, for example, in a state where the user displays an image (moving image) in which a landscape or the like appears on the display 75.

The image displayed on the display 75 may include an image captured by the imaging unit 72 or an image captured by another imaging device and captured in the user terminal 22. An image captured by a camera of the user terminal 22 attached to a dashboard of an automobile may be used for playing back music.

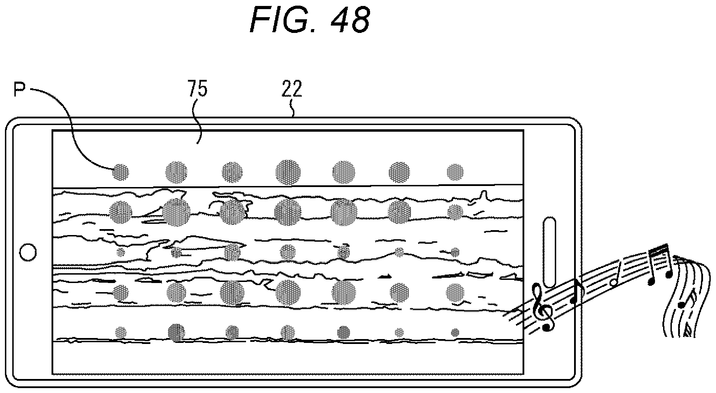

Fig. 48 is a diagram illustrating a display example of the user terminal 22 during music playback.

Fig. 48 illustrates a user terminal 22 that displays an image of a landscape of a beach. In the user terminal 22, image analysis is performed on each frame of the moving image, and the music output to the user changes on the basis of the detected luminance. The change of the music is realized by changing the music generation parameter on the basis of the luminance.

The luminance of the image illustrated in Fig. 48 changes according to a change in a wave state or the like. The music being played changes in conjunction with the change in the wave state.

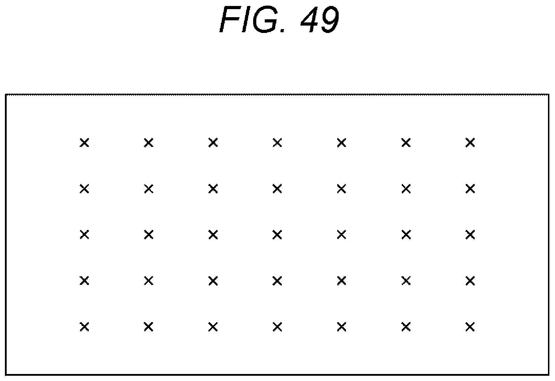

Luminance detection positions are set at a plurality of positions in the frame as indicated by cross marks in Fig. 49. In the example of Fig. 49, five detection positions in the vertical direction and seven detection positions in the horizontal direction are set side by side at equal intervals. For example, the luminance of the pixel at each detection position is detected, and music is played back on the basis of each luminance. The pixel to be detected for the luminance at one detection position may be one pixel or a plurality of pixels. Note that the detection position of the luminance may be fixed, or the position and the number of detection positions may be changed on the user side. In addition, the detection position may dynamically change according to the type of content.

A production image P in Fig. 48 superimposed and displayed on the image of the scenery indicates each detection position. In the example of Fig. 48, light-colored circular images in which predetermined transparency is set are displayed as the production images P. The five production images P in the vertical direction and the seven production images P in the horizontal direction are displayed side by side at equal intervals.

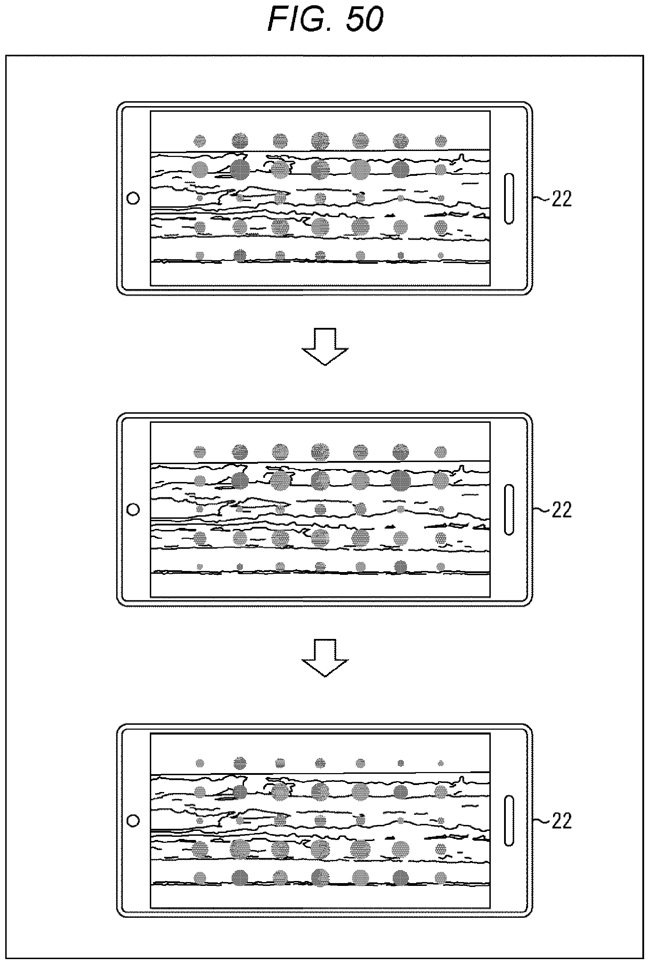

As illustrated in Fig. 50, the size of the production image P changes according to the luminance of each detection position. Since the luminance at each detection position changes according to the change in the wave state, the size of the production image P displayed at each detection position changes in conjunction with the change in the wave state.

Instead of changing the size of the production image P, the color of the production image P may change according to the luminance, or the shape of the production image P may change according to the luminance. As described above, the states of various components of the production image can be changed according to the luminance. In addition, the luminance detection positions may be set at only one place instead of a plurality of places.

Before the start of music generation as described above, mapping for setting a detection position to an arbitrary position may be performed on the basis of an analysis result of an image or the like. In this case, the number and location of the detection positions change according to the content of the image and the like.

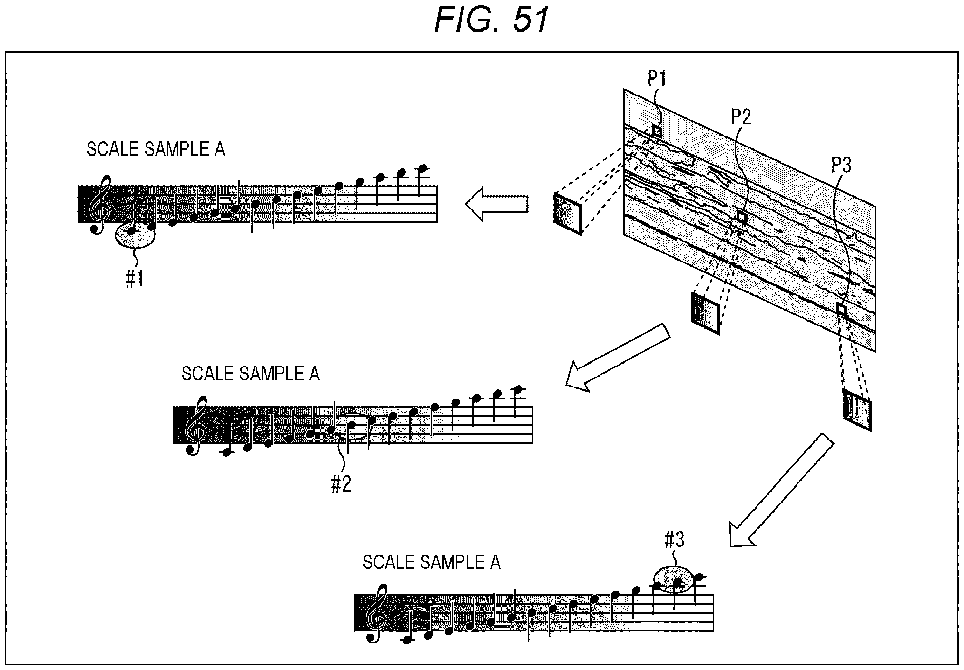

Fig. 51 is a diagram illustrating an example of music generation.

In the example of Fig. 51, an example of music generation based on luminance at each of the detection positions P1 to P3 which are some detection positions is illustrated. The detection positions P1 to P3 are detection positions set at the upper left, the center, and the lower right on the image, respectively.

As indicated by outlined arrows in Fig. 51, a scale sample A, which is music of a predetermined length, is commonly set for each detection position. For example, a music generation parameter that specifies from which scale a sound is to be played back changes depending on luminance. In the example of Fig. 51, playback from the scale indicated by an ellipse #1 is designated according to the luminance of the detection position P1, and playback from the scale indicated by an ellipse #2 is designated according to the luminance of the detection position P2. Further, playback from the scale indicated by an ellipse #3 is designated according to the luminance of the detection position P3.

The sounds of the scale samples A played back from the scales designated by the respective music generation parameters are synthesized and output. The image of music generation as described above is an image in which a musical instrument is virtually arranged at each detection position on the image and sound is output from a plurality of virtually arranged musical instruments.

Instead of setting the same music for each detection position, different music may be set for each detection position.

### <Modifications>

The work on the creator terminal 11 may be performed using a three-dimensional simulation tool.

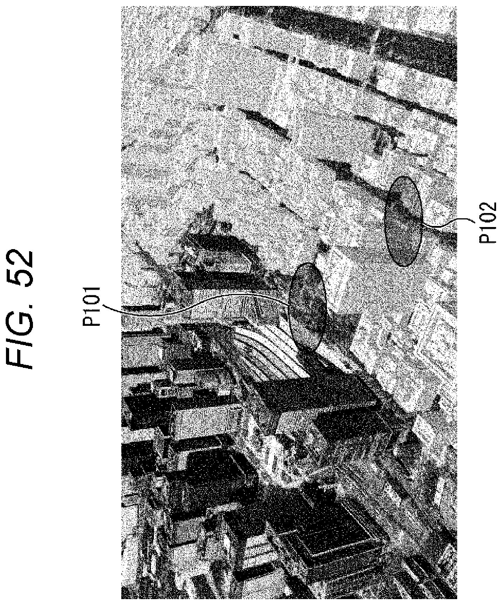

Fig. 52 is a diagram illustrating a display example of a map used for setting an area.

A three-dimensional map as illustrated in Fig. 52 may be displayed on the setting screen in Fig. 10 or the like and used for area setting. The three-dimensional map is displayed by, for example, a three-dimensional simulation tool. The creator can set a point that triggers the music remix by designating positions P101 and P102 that are positions on the three-dimensional map.

The present technology is also applicable to music playback in a moving object other than an automobile, such as a train or a bicycle. Furthermore, the playback control as described above may be performed when the user walks.

An old sound source such as a tape sound source may be used as a sound source separation target. There is a possibility that the sound quality is improved due to, for example, elimination of noise during recording.

Although compatibility is good or poor when used in combination at the time of remixing, setting may be performed for each track. For example, tracks whose parts are easy to understand and tracks acquired from music having a standard band configuration are compatible tracks. In addition, tracks acquired from a music piece with a part bias and tracks acquired from a music piece played using a national musical instrument are tracks that are incompatible.

The quality of the sound source separation may be evaluated by quantitative evaluation or qualitative evaluation. The quality evaluation may be performed on the basis of the review of the user by statistically analyzing the comment or the like.

In a case where the creator can set the track data of each sound source in advance, the track data may be uploaded to the information processing server 12 together with the data of the existing music as the correct answer data of the sound source separation. In this manner, a mechanism for collecting learning data used for learning the inference model for sound source separation is prepared in the production workflow.

The track data of each sound source acquired by the sound source separation already performed may be stored in the information processing server 12 instead of performing the sound source separation each time at the time of remixing. In this case, the user terminal 22 requests the information processing server 12 for the track data subjected to the sound source separation, and the track data transmitted from the information processing server 12 in response to the request is used for the playback control.

### <Other modifications>

The first embodiment of the present technology has been described above. Note that the present technology can be applied not only to a case where the user is in a moving object such as a vehicle but also to a case where the user is moving on foot.

In addition, it can be applied not only to the real world but also to a game using AR or VR, an application, and a virtual space such as metaverse.

For example, consider an application in which a user moves in the metaverse space on an automobile in the metaverse space. In this case, it is conceivable that the user moves in the virtual space by riding on a vehicle in the metaverse space as an avatar, instead of the vehicle in the real world.

At that time, the music data may be set for each area set in the metaverse space, and the playback control of the music data may be performed when the area is switched. Furthermore, in a case where the user has an acquaintance in the area, or the like, playback control may be performed such that the notification sound is additionally played back as an additional track in the main track.

As described above, the present technology is applied to the virtual space, so that the user can enjoy realistic feeling and experience closer to the real world also in the virtual space.

### • Examples of combinations of configurations

Note that the present technology may also have following configurations.
(1) An information processing apparatus including:
   a content information setting unit that sets content information including content parameter information defining a content of playback control of content;
   a trigger information setting unit that sets trigger information defining a condition for performing playback control of the content; and
   a content generation parameter setting unit that sets a content generation parameter by associating the content information with the trigger information.
(2) The information processing apparatus according to the above (1), further including
   a display unit that displays a screen for setting the content generation parameter.
(3) The information processing apparatus according to the above (1) or (2),
   in which the content information further includes metadata of the content, and
   the metadata is information including at least one of a key, a beat, BPM, a code, a playback time, tonality, a musical instrument type of the content, or information associated with position data of the content in a case where the content is object audio.
(4) The information processing apparatus according to any one of the above (1) to (3),
   in which the content information further includes information for associating first content data configuring the content with information associated with at least one piece of second content data added to the first content data.
(5) The information processing apparatus according to the above (4),
   in which the first content data and the second content data are loop materials having a predetermined number of bars and a playback time, and a content of playback control is defined by the content generation parameter.
(6) The information processing apparatus according to the above (4) or (5),
   in which the first content data includes data selected from data prepared in advance or includes use of existing music, and
   the second content data includes data selected from data prepared in advance.
(7) The information processing apparatus according to any one of the above (1) to (6),
   in which the trigger information is information including at least any one of POI information, landmark information, area information, information associated with a moving object in which the user is, or information on the user himself/herself.
(8) The information processing apparatus according to the above (7),
   in which the POI information is set as information indicating a start point and an end point of a POI,
   the landmark information is set as information indicating a start point and an end point of a landmark,
   the area information is set as information indicating start/end of an area, and
   the information associated with the moving object is set as information indicating start/stop, stop time, start/end of right/left turn, and speed of the moving object.
(9) The information processing apparatus according to the above (7) or (8),
   in which at least one of the POI information, the landmark information, or the area information has a unique parameter.
(10) The information processing apparatus according to any one of the above (1) to (9),
   in which the content is track data of a specific sound source acquired by sound source separation intended for existing music.
(11) An information processing method for an information processing apparatus, including:
   setting content information including content parameter information defining content of playback control of content;
   setting trigger information defining a condition for performing playback control of the content; and
   setting a content generation parameter by associating the content information with the trigger information.
(12) A program for causing a computer to execute processing including:
   setting content information including content parameter information defining content of playback control of content;
   setting trigger information defining a condition for performing playback control of the content; and
   setting a content generation parameter by associating the content information with the trigger information.
(13) An information processing apparatus including:
   an event acquisition unit that acquires an event during movement of a user;
   an acquisition unit that acquires a content generation parameter set by associating content information including content parameter information defining a content of playback control of content with trigger information defining a condition for performing the playback control of the content; and
   a content playback control unit that performs playback control of the content on the basis of the content information associated with the trigger information in a case where the event serving as the condition defined by the trigger information is acquired.
(14) The information processing apparatus according to the above (13),
   in which the event acquisition unit acquires at least any one of a position of the user, information indicating a state of a moving object in which the user is, or information on the user himself/herself.
(15) The information processing apparatus according to the above (13) or (14),
   in which the trigger information is at least any one of POI information, landmark information, area information, or information associated with a moving object in which the user is.
(16) The information processing apparatus according to any one of the above (13) to (15), further including
   a content generation parameter control unit that determines whether or not to control the content generation parameter on the basis of the event and the trigger information.
(17) The information processing apparatus according to the above (16),
   in which, in a case where it is determined to perform control of the content generation parameter, the content playback control unit performs playback control based on the content generation parameter controlled in accordance with the event.
(18) The information processing apparatus according to the above (16) or (17),
   in which the content generation parameter control unit performs control of the content generation parameter on the basis of a traffic condition or a speed limit.
(19) The information processing apparatus according to any one of the above (13) to (17), further including
   a sound source separation unit that performs sound source separation on existing music and acquires track data of each sound source,
   in which the content playback control unit performs playback control using the track data acquired by sound source separation as the content.
(20) The information processing apparatus according to the above (19), further including
   a music acquisition unit that acquires the existing music to be subjected to sound source separation on the basis of separation information including information indicating whether or not the existing music is sound source separable music.
(21) The information processing apparatus according to the above (19) or (20),
   in which the separation information includes at least any one of information indicating a type of a sound source or information indicating whether or not sound source separation has been performed together with information indicating whether or not the music is sound source separable music.
(22) An information processing method for an information processing apparatus, the method including:
   acquiring an event during movement of a user;
   acquiring a content generation parameter set by associating content information including content parameter information defining a content of playback control of content with trigger information defining a condition for performing the playback control of the content; and
   performing playback control of the content on the basis of the content information associated with the trigger information in a case where the event serving as a condition defined by the trigger information has been acquired.
(23) A program for causing a computer to execute processing including:
   acquiring an event during movement of a user;
   acquiring a content generation parameter set by associating content information including content parameter information defining a content of playback control of content with trigger information defining a condition for performing the playback control of the content; and
   performing playback control of the content on the basis of the content information associated with the trigger information in a case where the event serving as a condition defined by the trigger information has been acquired.
(24) An information processing system including:
   a first information processing apparatus including:
   a content information setting unit that sets content information including content parameter information defining a content of playback control of content;
   a trigger information setting unit that sets trigger information defining a condition for performing playback control of the content; and
   a content generation parameter setting unit that sets a content generation parameter by associating the content information with the trigger information; and
   a second information processing apparatus including:
      an event acquisition unit that acquires an event during movement of the user;
      an acquisition unit that acquires the content generation parameter; and
      a content playback control unit that performs playback control of the content on the basis of the content information associated with the trigger information in a case where the event serving as the condition defined by the trigger information has been acquired.

### REFERENCE SIGNS LIST

- 1: Information processing system
- 11: Creator terminal
- 12: Information processing server
- 13: Music data playback system
- 21: Vehicle
- 22: User terminal
- 101: Music generation parameter setting unit
- 111: Music information setting unit
- 112: Trigger information setting unit
- 301: Music control unit
- 311: Position information acquisition unit
- 312: Vehicle body information acquisition unit
- 313: Music generation parameter control unit
- 314: Music playback control unit
- 401: Output unit

## Claims

1. An information processing apparatus comprising:
a content information setting unit that sets content information including content parameter information defining a content of playback control of content;
a trigger information setting unit that sets trigger information defining a condition for performing playback control of the content; and
a content generation parameter setting unit that sets a content generation parameter by associating the content information with the trigger information.

2. The information processing apparatus according to claim 1, further comprising
a display unit that displays a screen for setting the content generation parameter.

3. The information processing apparatus according to claim 1,
wherein the content information further includes metadata of the content, and
the metadata is information including at least one of a key, a beat, BPM, a code, a playback time, tonality, a musical instrument type of the content, or information associated with position data of the content in a case where the content is object audio.

4. The information processing apparatus according to claim 1,
wherein the content information further includes information for associating first content data configuring the content with information associated with at least one piece of second content data added to the first content data.

5. The information processing apparatus according to claim 4,
wherein the first content data and the second content data are loop materials having a predetermined number of bars and a playback time, and a content of playback control is defined by the content generation parameter.

6. The information processing apparatus according to claim 4,
wherein the first content data includes data selected from data prepared in advance or includes use of existing music, and
the second content data includes data selected from data prepared in advance.

7. The information processing apparatus according to claim 1,
wherein the trigger information is information including at least any one of POI information, landmark information, area information, information associated with a moving object in which the user is, or information on the user himself/herself.

8. The information processing apparatus according to claim 7,
wherein the POI information is set as information indicating a start point and an end point of a POI,
the landmark information is set as information indicating a start point and an end point of a landmark,
the area information is set as information indicating start/end of an area, and
the information associated with the moving object is set as information indicating start/stop, stop time, start/end of right/left turn, and speed of the moving object.

9. The information processing apparatus according to claim 7,
wherein at least one of the POI information, the landmark information, or the area information has a unique parameter.

10. The information processing apparatus according to claim 1,
wherein the content is track data of a specific sound source acquired by sound source separation intended for existing music.

11. An information processing method for an information processing apparatus, the method comprising:
setting content information including content parameter information defining content of playback control of content;
setting trigger information defining a condition for performing playback control of the content; and
setting a content generation parameter by associating the content information with the trigger information.

12. A program for causing a computer to execute processing comprising:
setting content information including content parameter information defining content of playback control of content;
setting trigger information defining a condition for performing playback control of the content; and
setting a content generation parameter by associating the content information with the trigger information.

13. An information processing apparatus comprising:
an event acquisition unit that acquires an event when a user moves;
an acquisition unit that acquires a content generation parameter set by associating content information including content parameter information defining a content of playback control of content with trigger information defining a condition for performing the playback control of the content; and
a content playback control unit that performs playback control of the content on a basis of the content information associated with the trigger information in a case where the event serving as the condition defined by the trigger information is acquired.

14. The information processing apparatus according to claim 13,
wherein the event acquisition unit acquires at least any one of a position of the user, information indicating a state of a moving object in which the user is, or information on the user himself/herself.

15. The information processing apparatus according to claim 13,
wherein the trigger information is at least any one of POI information, landmark information, area information, or information associated with a moving object in which the user is.

16. The information processing apparatus according to claim 13, further comprising
a content generation parameter control unit that determines whether or not to control the content generation parameter on a basis of the event and the trigger information.

17. The information processing apparatus according to claim 16,
wherein in a case where it is determined to perform control of the content generation parameter, the content playback control unit performs playback control based on the content generation parameter controlled according to the event.

18. The information processing apparatus according to claim 16,
wherein the content generation parameter control unit performs control of the content generation parameter on a basis of a traffic condition or a speed limit.

19. The information processing apparatus according to claim 13, further comprising
a sound source separation unit that performs sound source separation on existing music and acquires track data of each sound source,
wherein the content playback control unit performs playback control using the track data acquired by sound source separation as the content.

20. The information processing apparatus according to claim 19, further comprising
a music acquisition unit that acquires the existing music to be subjected to sound source separation on a basis of separation information including information indicating whether or not the existing music is sound source separable music.

21. The information processing apparatus according to claim 20,
wherein the separation information includes at least any one of information indicating a type of a sound source or information indicating whether or not sound source separation has been performed together with information indicating whether or not the music is sound source separable music.

22. An information processing method for an information processing apparatus, the method comprising:
acquiring an event during movement of a user;
acquiring a content generation parameter set by associating content information including content parameter information defining a content of playback control of content with trigger information defining a condition for performing the playback control of the content; and
performing playback control of the content on a basis of the content information associated with the trigger information in a case where the event serving as a condition defined by the trigger information has been acquired.

23. A program for causing a computer to execute processing comprising:
acquiring an event during movement of a user;
acquiring a content generation parameter set by associating content information including content parameter information defining a content of playback control of content with trigger information defining a condition for performing the playback control of the content; and
performing playback control of the content on a basis of the content information associated with the trigger information in a case where the event serving as a condition defined by the trigger information has been acquired.

24. An information processing system comprising:
a first information processing apparatus including:
a content information setting unit that sets content information including content parameter information defining a content of playback control of content;
a trigger information setting unit that sets trigger information defining a condition for performing playback control of the content; and
a content generation parameter setting unit that sets a content generation parameter by associating the content information with the trigger information; and
a second information processing apparatus including:
an event acquisition unit that acquires an event during movement of the user;
an acquisition unit that acquires the content generation parameter; and
a content playback control unit that performs playback control of the content on a basis of the content information associated with the trigger information in a case where the event serving as the condition defined by the trigger information has been acquired.
